# EUROPEAN PATENT APPLICATION

(11) **EP 4 586 514 A1**
(43) Date of publication of application: **16.07.2025**
(21) Application number: 25151181.2
(22) Date of filing: 10.01.2025
(51) Int. Cl.: H04B 7/024, H04W 72/27, H04W 84/12, H04B 7/0452, H04B 7/06, H04L 5/00

(54) **MULTI-ACCESS-POINT COORDINATION PER TXOP FRAME SEQUENCE WITH PER STATION FEEDBACK SCHEDULING**

(30) Priority: 11.01.2024 IN 202421002187; 30.08.2024 US 202463689021 P; 07.01.2025 US 202519012711
(71) Applicant: Avago Technologies International Sales Pte. Limited, Singapore 768923 (SG)
(72) Inventor: Sundaravaradhan, Srinath Puducheri, Irvine, 92618 (US); Fischer, Matthew J., Irvine, 92618 (US); Kondylis, George D., Irvine, 92618 (US); Su, Hang, Irvine, 92618 (US); Porat, Ron, Irvine, 92618 (US); Verma, Sindhu, Irvine, 92618 (US); Adhikari, Shubhodeep, Irvine, 92618 (US); Lin, Lekun, Irvine, 92618 (US)
(74) Representative: Dilg, Haeusler, Schindelmann Patentanwaltsgesellschaft mbH

(57) **Abstract**

The technical solutions are directed to coordinated beamforming per-TXOP frame sequence negotiation. A first access point, AP, (205) can transmit, to a second AP (205) and a first candidate set of stations (240), a first message to initiate transmission opportunity, TXOP, and a CBF request (525). The second AP (205) can transmit a second message to a second candidate set of stations (240) of the second AP (205) identified to participate in the TXOP with a CBF response (530) responsive to the CBF request (525). The first AP (205), responsive to receiving the CBF response (530), can transmit to the second AP (205) a third message having a CBF trigger (545) comprising information to synchronize a CBF transmission to be communicated during the TXOP.

## Description

### CROSS-REFERENCE TO RELATED PATENT APPLICATIONS

This application claims the benefit of and priority to U.S. Provisional Application No.: 63/689,021 filed August 30, 2024 and claims the benefit of and priority to an Indian Provisional Application No.: 202421002187, filed January 11, 2024, both of which are incorporated herein by reference in their entirety.

### FIELD OF THE DISCLOSURE

This disclosure generally relates to systems and methods for wireless communication between access points and wireless communication devices, including, without limitation communication reducing interference to unintended communication devices.

### BACKGROUND

Access points (APs), such as Wi-Fi routers, can facilitate wireless communication to any number of client wireless communication devices, also referred to as clients, stations or STAs. These clients, stations or STAs can include smartphones, tablets, computers that can be within the wireless communication range of the APs. Sometimes, clients can experience interferences that can be caused by APs (e.g., within the same or a different wireless communication network) transmitting data to other clients or STAs. Such interferences can be exacerbated when network density is increased and transmission opportunities are reduced.

### SUMMARY OF THE DISCLOSURE

The technical solutions of the present disclosure are directed to systems and methods for establishing coordinated beamforming (CBF) per transmission opportunity (TXOP) frame sequence in which CBF transmission scheduling can be established prior to feedback data from the participating station devices. When multiple base stations (BS) or access points (AP) are implementing CBF while transmitting data to a user device or user equipment, the lack of a trigger frame from the participating APs prior to the initial CBF physical protocol data unit (PPDU) transmission can make it difficult to coordinate or synchronize the start of the CBF communication. Moreover, inability of APs to account for changing parameters or availabilities of all AP and station device participants, makes it more challenging to accurately and efficiently establish the CBF communication. In such situations, there is a risk of one of the APs start the CBF PPDU earlier or later than other APs causing synchronization issues between the APs or that performance by some of the participants will not be as expected. These issues can cause mismatches in timing which ultimately lead to phase misalignment and reduced beamforming efficiency. The synchronization issues can further cause different oscillator frequences at different APs leading to phase and amplitude errors. The technical solution can overcome these challenges by utilizing CBF-TXOP frame sequences to synchronize the APs and/or stations when engaging in CBF PPDU transmissions using feedback data from the participating devices.

At least one aspect of the technical solutions is directed to a system. The system can include a first access point (AP) that can be configured, such as via instructions or data stored in memory to be accessed and executed by one or more processors of the first AP. The first AP can be configured to transmit, to a second AP that is capable of participating in coordinated beamforming (CBF) and a first candidate set of stations of the first AP, a first message to initiate transmission opportunity (TXOP) with an embedded CBF request. The second AP is configured to transmit a second message to the first AP and a second candidate set of stations of the second AP identified to participate in the TXOP with an embedded CBF response responsive to the CBF request. The first AP, responsive to receiving the CBF response that second AP is to participate in CBF, transmits to the second AP a third message having a CBF trigger comprising information to synchronize a CBF transmission to be communicated during the TXOP.

The first AP can be configured to include in the CBF request a list of identifiers for the first candidate set of stations to participate in CBF and information on the proposed number of spatial streams in the CBF transmission for each station in the first candidate set of stations. The CBF response of the second AP can include a list of identifiers for the second candidate set of stations to participate in CBF and a proposed number of spatial streams in the CBF transmission for each station in the second candidate set of stations for the first AP to determine a schedule for the CBF transmission.

The first AP can be configured to receive from the first candidate set of stations, responsive to the first message, information on availability to participate in the TXOP and information on durations of availability in the TXOP of the first candidate set of stations. The first AP can be configured to determine, based on the information on availability and the information on durations, at least one of: an ability of the first AP to participate in CBF during the TXOP, a first set of stations from the first candidate set of stations of the first AP to participate in CBF during the TXOP, or a maximum duration of participation in CBF of the first AP during the TXOP. The first message can include in the third message information an indication of at least one of: the ability of the first AP to participate in CBF during the TXOP, the first set of stations of the first AP to participate in CBF during the TXOP, or a maximum duration of participation in CBF of the first AP during the TXOP.

The first AP can include padding in the first message to provide at least one of the second AP or at least one station of the first candidate set of stations a time interval to process information included in the first message prior to generating one or more responses on availability of the second AP or the at least one station to participate in CBF. The second AP is configured to transmit, a preliminary CBF response to the first access point, indicative of participation of the second AP prior to receipt of information on availability of the second candidate set of stations. The first AP can determine a schedule for transmitting data of one or more stations of the first candidate set of stations during the TXOP prior to receiving information on availability of the second candidate set of stations. The first AP can adjust the schedule responsive to a message transmitted by the second AP, the message including the information on the second candidate set of stations following receipt of the CBF response from the second AP.

At least one aspect of the technical solutions is directed to a system. The system can include a first access point (AP) that can be configured, such as via instructions or data stored in memory to be accessed and executed by one or more processors of the first AP. The first AP can be configured to transmit, to a second AP that is capable of participating in coordinated beamforming (CBF) and a first candidate set of stations of the first AP, a first message to initiate transmission opportunity (TXOP) with an embedded CBF request. The first AP can be configured to transmit, to a second AP that is capable of participating in coordinated beamforming (CBF) and a first candidate set of stations of the first AP, a first message to initiate transmission opportunity (TXOP) with an embedded CBF request. The first AP can be configured to receive, from the first candidate set of stations responsive to the first message, one or more indications corresponding to availability of one or more first stations of the first candidate set of stations for participation in the TXOP. The first AP can be configured to transmit, to the second AP in response to the one or more indications, an adjusted first message to initiate the TXOP according to an embedded adjusted CBF request. The first AP can be configured to receive, from the second AP responsive to the first AP not terminating the TXOP via the adjusted first message, a second message that includes an adjusted CBF response to the adjusted first message. The second message can include information on a second candidate set of stations of the second AP. The first AP can be configured to transmit, responsive to the second AP indicating participation in the TXOP via the second message, a third message to the second AP having a CBF trigger comprising information to synchronize a CBF transmission to be communicated during the TXOP.

The first AP can be configured to determine, based on the one or more indications, that a first subset of the one or more first stations is unavailable for participation in the TXOP and a second subset of the one or more first stations is available for participation in the TXOP. The first AP can be configured to generate, responsive to the determination, the adjusted CBF request indicating the second subset of the one or more first stations as participating in the TXOP. The one or more indicators can be received via at least one of a trigger-based physical protocol data unit (TB-PPDU) format or a non-high-throughput duplicate transmission (non-HT DUP) format. The first AP can be configured to receive the one or more indications corresponding to one or more durations of availability of the one or more first stations. The first AP can be configured to determine the availability of the one or more first stations based on the one or more durations.

An aspect of the technical solutions is directed to a method. The method can include transmitting, by a first access point (AP) to a second AP that is capable of participating in coordinated beamforming (CBF) and a first candidate set of stations of the first AP, a first message to initiate transmission opportunity (TXOP) with an embedded CBF request. The method can include transmitting, by the second AP, a second message to the first AP and a second candidate set of stations of the second AP identified to participate in the TXOP with an embedded CBF response responsive to the CBF request. The method can include transmitting, by the first AP, responsive to receiving the CBF response that second AP is to participate in CBF, to the second AP a third message having a CBF trigger comprising information to synchronize a CBF transmission to be communicated during the TXOP.

The method can include inserting or including, by the first AP, in the CBF request, a list of identifiers for the first candidate set of stations to participate in the CBF and information on a proposed number of spatial streams in the CBF transmission for each station in the first candidate set of stations. The method can include inserting or including, by the second AP, , within the CBF response from the second AP, a list of identifiers for the second candidate set of stations to participate in the CBF and a proposed number of spatial streams in the CBF transmission for each station in the second candidate set of stations. The method can include determining, by the first AP, a schedule for the CBF transmission.

The method can include receiving, by the first AP, from one or more stations of the first candidate set of stations, responsive to the first message, information on availability to participate in the TXOP or information on durations of availability in the TXOP of the one or more stations of the first candidate set of stations. The method can include determining, by the first AP, , based on the information on availability or the information on durations, at least one of: an ability of the first AP to participate in CBF during the TXOP, or a first set of stations from the first candidate set of stations of the first AP to participate in CBF during the TXOP, or a maximum duration of participation in CBF of the first AP during the TXOP. The method can include including, by the first AP, in in a third message, information an indication of at least one of: the ability of the first AP to participate in CBF during the TXOP, the first set of stations of the first AP to participate in CBF during the TXOP, or a maximum duration of participation in CBF of the first AP during the TXOP.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGs. 1B and 1C are block diagrams depicting computing devices useful in connection with the methods and systems described herein, according to some embodiments.
FIG. 2 illustrates an example system of coordinated partial rank nulling in a multiple AP and multiple STA environment, according to some embodiments.
FIG. 3 is an example plot of a signal-space of a STA transmission in the context of a single AP partial-rank nulling.
FIG. 4 is an example plot of two signal-spaces two STA transmissions in the context of 2 AP coordinated partial-rank nulling.
FIG. 5 is an example block diagram of a system for a multi-access-point coordination per CBF TXOP frame sequence.
FIG. 6 is an example flow diagram of a method for multi-access-point coordination per CBF TXOP frame sequence.
FIG. 7 is an example flow diagram of a second method for multi-access-point coordination per CBF TXOP frame sequence.

The details of various embodiments of the methods and systems are set forth in the accompanying drawings and the description below.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} draft version D3.0 standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes Multi access-point coordination per CBF TXOP frame sequence with pre-station feedback scheduling.

### A. Computing and Network Environment

Prior to discussing specific embodiments of the present solution, it can be helpful to describe aspects of the operating environment as well as associated system components (e.g., hardware elements) in connection with the methods and systems described herein.

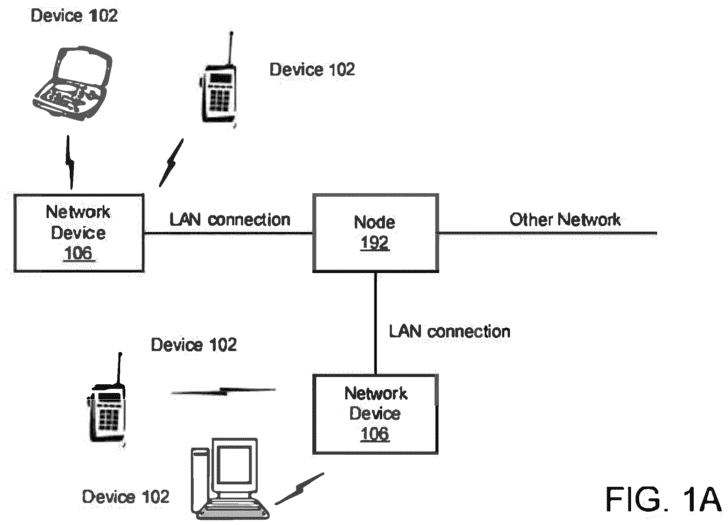

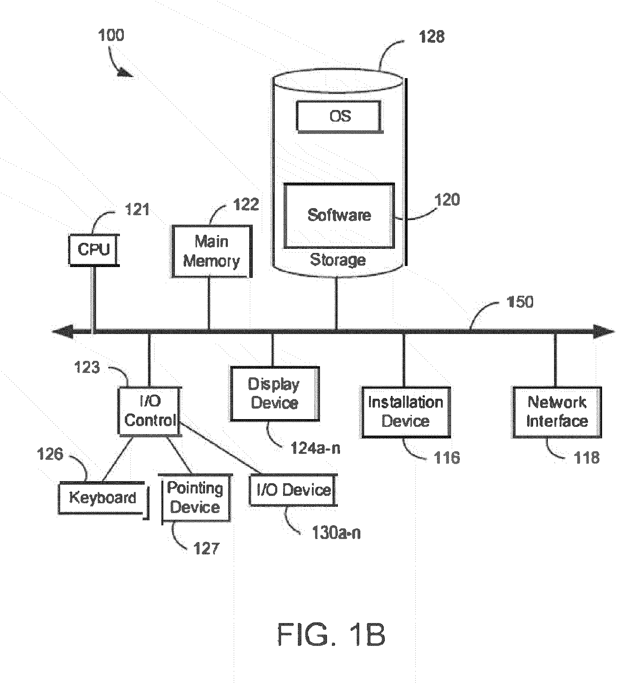

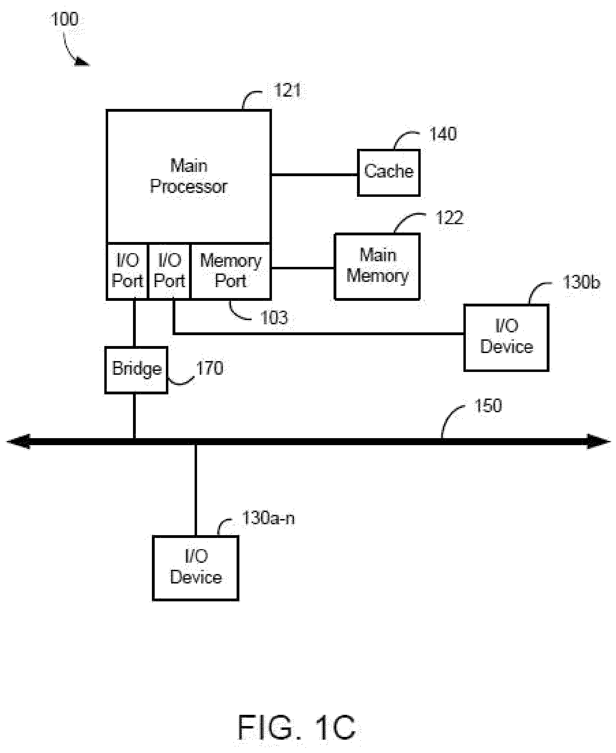

Referring to FIG. 1A, an embodiment of a network environment is depicted. In brief overview, the network environment includes a wireless communication system that includes one or more access points (APs) or network devices 205, one or more stations, also referred to as STAs or wireless communication devices 240 and a network hardware component or network hardware 192. The wireless communication devices or STAs 240 can for example include laptop computers, tablets, personal computers, and/or cellular telephone devices. The details of an embodiment of each station or wireless communication device 240 and AP or network device 205, such as their internal hardware and software configurations, can be described in greater detail with reference to FIGS. 1B and 1C. The network environment can be an ad hoc network environment, an infrastructure wireless network environment, a subnet environment, etc. in one embodiment. The network devices 205 or APs can be operably coupled to the network hardware 192 via local area network connections. Network devices 205 or APs can include, for example, Wi-Fi devices providing WLANs, or 5G base stations for providing cellular networks. The network hardware 192, which can include a router, gateway, switch, bridge, modem, system controller, appliance, etc., can provide a local area network connection for the communication system. Each of the network devices 205 or APs can have an associated antenna or an antenna array to communicate with the wireless communication devices in its area. The wireless communication devices 240 can register with a particular network device 205 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 240 can be mobile or relatively static with respect to network device 205 or AP.

In some embodiments, a network device 205 or AP includes a device or module (including a combination of hardware and software) that allows wireless communication devices 240 to connect to a wired network using wireless fidelity (Wi-Fi), or other standards. A network device 205 or AP can sometimes be referred to as a wireless access point (WAP). A network device 205 or AP can be implemented (e.g., configured, designed and/or built) for operating in a wireless local area network (WLAN). A network device 205 or AP can connect to a router (e.g., via a wired network) as a standalone device in some embodiments. In other embodiments, network device 205 or AP can be a component of a router. Network device 205 or AP can provide multiple devices access to a network. Network device 205 or AP can, for example, connect to a wired Ethernet connection and provide wireless connections using radio frequency links for other devices 240 to utilize that wired connection. A network device 205 or AP can be implemented to support a standard for sending and receiving data using one or more radio frequencies. Those standards, and the frequencies they use can be defined by the IEEE (e.g., IEEE 802.11 standards). A network device 205 or AP can be configured and/or used to support public Internet hotspots, and/or on a network to extend the network's Wi-Fi signal range.

In some embodiments, the access points or network devices 205 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 240 can include a built-in radio and/or is coupled to a radio. Such wireless communication devices 240 and /or access points or network devices 205 can operate in accordance with the various aspects of the disclosure as presented herein to enhance performance, reduce costs and/or size, and/or enhance broadband applications. Each wireless communication device 240 can have the capacity to function as a client node seeking access to resources (e.g., data, and connection to networked nodes such as servers) via one or more access points or network devices 205.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 240 and access point(s) or network devices 205 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 240 or network device 205. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to, and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

When an APs transmits data to a particular intended recipient STA within its own basic service set (BSS), other STAs within the same, or a neighboring BSSs (e.g., other WLANs) can be within the range of the transmitting AP and experience interference. Interference can include any undesired disruption or degradation of a signal, communication, or system caused by the presence of an external signal, noise, or other factors that interfere with the intended transmission or reception of information. Interference can include unwanted signal disruption caused by transmissions from one access point (AP) affecting the communication between another AP and its associated stations (STAs), which CBF can mitigate by adjusting transmission patterns to minimize signal overlap with the unintended STA recipients. For instance, when transmissions destined for different STAs simultaneously occur on the same channels, interferences caused by the transmissions can be difficult to resolve as the information from one or more of the transmissions may be unknown and a relationship between the transmissions may be unknown. Such interferences can cause latencies, delays or dropped network packets, increase processing power thereby increasing energy consumption, reduced optimization of beamforming networks, making data transmissions within such networks more difficult, adversely affecting user experience.

The technical solutions of the present disclosure overcome these challenges by facilitating a multi-AP coordinated beamforming (CBF) per transmission opportunity (TXOP) frame sequence. The CBF can include any technique or approach in which multiple APs collaboratively adjust their beamforming patterns to deliver their signals or transmissions to the intended stations while minimizing or canceling interference from such signals or transmissions at unintended stations. For example, the APs from different BSSs (e.g., WLANs) can use CBF TXOP frame sequences to configure their transmissions to be sent along vectors at which interferences from those APs are minimized at unintended recipient STAs, clients, or user devices. The technical solutions can include client devices (e.g., STAs) receiving data streams or vectors from the APs of their respective networks. A network, such as a WLAN of a particular AP, can include one or more basic service sets (BSS) having an AP and one or more STAs configured for wireless communication via the same AP, such as by being configured to the local WLAN of the AP. As APs may transmit any number of data streams to any number of STAs within their BSS, there can be synchronization of the APs when initiating the data streams causing phase misalignment reducing the beamforming efficiency. The technical solutions of the present disclosure can utilize various messages to convey all information (e.g., preamble contents) associated with the CBF PPDU transmission to respective STAs of each AP. In doing so, the technical solutions of the present solution allow multiple APs to communicate at the same time and frequency (e.g., simultaneous transmissions on the same channel), while avoiding interferences, thereby increasing throughput of the transmissions, decreasing latency and minimizing the spectrum use to avoid interference.

Technical solutions of the present disclosure can include systems and methods of multi-AP CBF TXOP frame sequences. The system and method can use nulling to initially reduce interference between the APs and STAs. Nulling can include one of the candidate features being considered for the next-generation Wi-Fi standard (UHR, 11bn). Nulling can include any technique in which an AP minimizes interfaces experienced by a STA by reducing the strength or power of unwanted signals from other sources. Nulling can include a technique in which a system can combine a signal with another signal in order to create a null (e.g., cancel out the original signal. Nulling can be utilized or included to minimize an AP interference seen by a STA due to the AP's transmissions to other STAs.

The CBF TXOP can be a time interval or a time window to provide at least one AP access to transmit data uninterrupted. The CBF TXOP duration can be specified by the physical layer (PHY) or medium access control (MAC) layer parameters. By exploiting the CBF TXOP, the APs can minimize (e.g., reduce below an acceptable threshold) synchronization and timing issues. For example, the CBF TXOP frame sequences can include techniques to minimize interference by improving on the synchronization of CBF PPDU transmissions. For instance, if an AP attempts to transmit a CBF PPDU, the AP can transmit a message to other APs indicating the information (e.g., MCS/Nss per STA, duration, preamble content, etc.) to align the phase of each AP prior to the CBF PPDU transmission. The present solution can provide a mechanism or a process to coordinate each AP to minimize interference at the STA while improving on the timing of the CBF PPDU transmission at each AP.

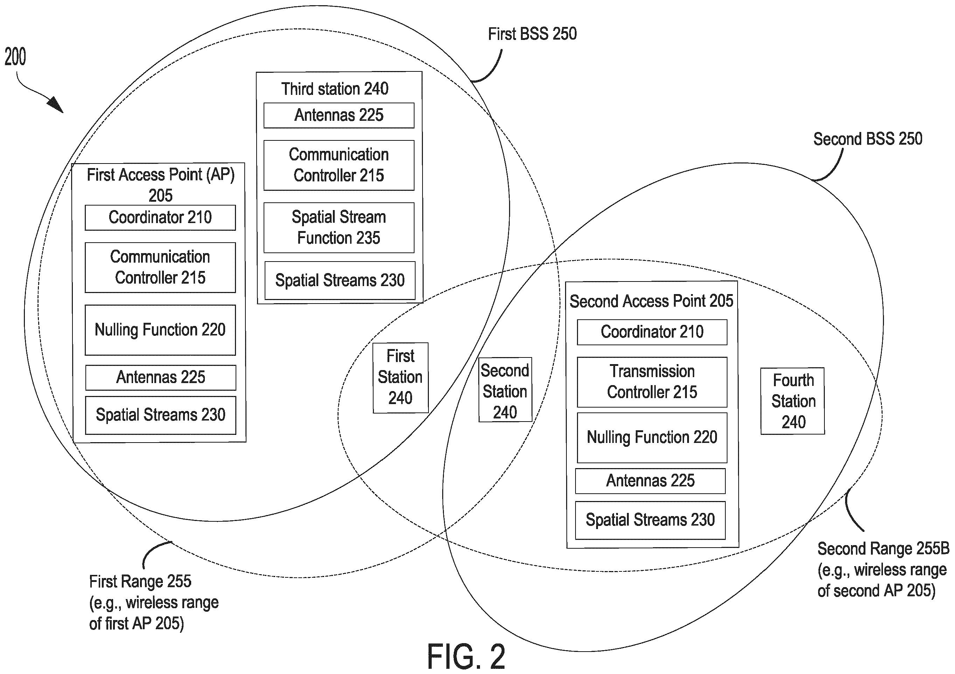

Referring now to FIG. 2, an example of a system 200 for implementing a coordinated nulling with multi-AP transmissions is illustrated. System 200 can include one or more access points (APs) 205 (e.g., Wi-Fi routers) providing transmissions to stations or STAs 240 within their BSSs 250. APs 205 can also have wireless transmission ranges 255 that can include STAs 240 outside of their BSS (e.g., STAs not configured to the WLANs of the respective APs, but still capable of receiving transmissions or interferences from those APs).

FIG. 2 can include a first AP 205 having a first BSS 250 including first station 240 and a second station 240, as well as a second AP 205 having a second BSS 250 including a second station 240 and a fourth station 240. Each of the first and second APs 205 can include one or more coordinators 210, communication controllers 215, nulling functions 220, antennas 225 and spatial streams 230. Each of the STAs 240 (e.g., first, second, third and fourth stations 240 in system 200) can include one or more antennas 225, communication controllers 215, spatial stream functions 235 and spatial streams 230. In addition to the STAs 240 within their own BSSs 250, each of the APs 205 can also have a wireless signal range 255 which can cover or include the STAs 240 of their own BSS 250, but also STAs 240 that are outside of their BSS 250. For example, in addition to the first and third STAs 240, the first range 255 of the first AP 205 can include the second STA 240 (e.g., from the BSS of the second AP 205). Similarly, in addition to the second and fourth STAs 240, the second AP 205 can have a second signal range 255 that can include the first STA 240 (e.g., from the BSS of the first AP 205)

FIG. 2 can illustrate an environment in which APs 205 can coordinate their transmissions according to their prior-negotiated and configured partial-rank nulling. For instance, system 200 can be used to provide single-AP partial-rank nulling (e.g., partially nulling interferences to non-recipient STAs within the BSS of the transmitting AP) and multi-AP partial-rank nulling (e.g., partially nulling interferences to non-recipient STAs within the same or a different BSS with respect to the transmitting AP).

AP 205 can include any combination of hardware and software that allows wireless communication devices, such as STAs 240, to connect wirelessly to a wired network or world wide web or internet. AP 205 can include any combination of hardware and software for facilitating wireless communication within a WLAN of the AP for any STAs 240 that are included in its BSS 250. APs 205 can include one or more communication devices, such as Wi-Fi routers, switches, Bluetooth hubs, cellular network base stations and can utilize any wireless communication protocols or standards, such as 802.11 for wireless communication.

APs 205 and STAs 240 can be configured for wireless communication in wireless communication networks, such as a LAN, WAN or a cellular network. For example, each AP 205 can include, be associated with, be coupled with, provide or facilitate a communication network, such as WLAN of a Wi-Fi for any clients or stations 240 of its own basic service set (BSS).

BSS 250 is a term to identify a collection of stations (e.g., devices) that are associated with the same wireless access point within a WLAN. For instance, BSS can identify a set or collection of one or more stations and/or one or more APs that communicate together within a wireless network. BSS 250 can include one or more APs and client devices (e.g., STAs 240) coupled to the AP within a particular coverage area, such as a range 255. BSS 250 can provide an infrastructure for the AP 205 to provide network communication to STAs 240 within its frequency coverage area. Within a BSS 250, an AP 205 can manage data distribution to various connected devices (e.g., STAs 240), facilitate implementation of security protocols or functions and roaming as STAs 240 may move in and out of its coverage area (e.g., range 255). Range 255 can include an area to which signals from the AP 205 can reach to recipient STAs 240. Range 255 can include STAs 240 that are within the BSS 250 of the given AP 205 or STAs 240 that are a part of BSS 250 of another AP 205, such as for example, first STA 240 which is a part of the first BSS 250 of the first AP 205, but also within a second range 255 of the second AP 205 servicing second and fourth STAs 240 of the second BSS 250.

Coordinator 210 can include any combination of hardware and software for coordinating communications between APs 205 and/or STAs 240. Coordinator 210 can include functionality (e.g., applications, computer code or programs) facilitating coordination of communication (e.g., transmissions) between APs 205 and STAs 240 or among APs 205. Coordinator 210 can include functionality for implementing a coordination phase to identify STAs 240 for which interference needs to be wholly or partially nulled and exchanging STA 240 information between APs 205. Coordinator 210 can include functionality for coordinating timing and frequencies, such as exchanging timing and frequencies information (e.g., communication bands or channels) between APs 205. Coordinator 210 can generate, facilitate, implement and apply settings or configurations to APs 205 and/or STAs 240 to facilitate coordinated partial-rank nulling.

Coordinator 210 can include a precoder functionality, such as a precoder algorithm for computing beamforming vectors for each STA 240 to achieve partial-rank nulling. Precoder can include a functionality for computing directions or vectors for beamforming transmissions to STAs 240. Precoder can include a functionality for utilizing information or data on directions or vectors at the STAs 240 at which interference is minimized or reduced below a threshold for acceptable level of interference (e.g., partial-rank nulling is achieved) to determine directions or vectors for beamforming transmissions to perform partial-rank nulling at such STAs 240.

Coordinator 210 can include the functionality to perform channel-sounding to STAs 240. For example, coordinator 210 can facilitate, instruct or request each STA to measure one or more MIMO channels for each sounding AP and provide measurements back to the coordinator 210. The relative phase-offsets across receive antennas 225 for the STA 240 can be maintained at constant values when measuring channels for different APs 205. Coordinator 210 can exchange with the STAs 240 estimates of the MIMO channel for a sounding AP (e.g., via a compressed beamforming report format (CBR), as provided in 802.11, or in Cartesian form). Coordinator 210 can exchange information for interfering APs 205 (e.g., APs 205 from external BSSs 250), such as when STAs 240 provide linear transformation of the MIMO channel from that particular interfering AP 205. The linear transformation can be determined using previously measured MIMO channel between the STA and its own AP 205 (e.g., AP 205 of STA's BSS 250). For example, linear transformation of the MIMO channel could represent projection onto one or more eigen-models of the MIMO channel measured between the STA and the AP 205 of STA's own BSS. For example, coordinator 210 can exchange (e.g., receive) set of directions in which an AP 205 is to minimize interference if the STA is receiving a particular number of intended spatial streams from its own AP 205 (e.g., AP 205 from STA's own BSS 250).

Coordinator 210 can include the functionality for facilitating or performing channel-sounding to STAs 240. Channel sounding can include transmitting signals and receiving, in response, characteristics, such as signal strength, delay and phase, and then using such received characteristics determine the quality of the communication channels. Coordinator 210 can transmit (e.g., individually or jointly with APs 205 of other BSSs 250) one or more null-data-packets (NDPs). NDPs can be synchronized in time and/or frequency (e.g., between multiple APs 205 performing simultaneous channel sounding). The number of sounding dimensions in the NDP can include a total number of antennas across the APs. Jointly transmitted NDPs can be preceded by one or more NDP announcement (NDPA) frames. For example, an AP 205 can transmit an NDPA on behalf of all APs 205 performing channel sounding to all the STAs 240 being sounded. For example, each of the APs 205 sends an NDPA sequentially to their own STAs 240. For example, all APs 205 transmit their NDPAs at the same time but separated in frequency (e.g., via OFDMA) with each AP 205 addressing the STAs 240 within its own BSS 250. For example, coordinator 210 can provide or facilitate trigger frames transmitted by the AP 205, based on which all the APs 205 participating in channel sounding can synchronize their carrier frequency offsets (CFOs) and the start time of their coordinated transmissions.

Communication controllers 215 can include any combination of hardware and software for implementing wireless communications between APs 205 and STAs 240. Communication controller 215 can include the functionality for providing and transmitting data (e.g., spatial streams) to the intended STAs 240. Communication controller 215 can transmit messages to STAs 240, such as inquiring about information, data or description of directions or vectors in which interferences are to be minimized at each STA 240. Communication controller 240 can include the functionality for configuring for transmission features of the AP 205 to perform and implement the transmissions of the spatial streams 230 in accordance with partial-rank nulling. For instance, communication controller 215 can configure antennas 225 and any other settings to facilitate or implement transmissions of spatial streams 230 according to the specific directions or vectors (e.g., as determined by the coordinator 210), to implement partial-rank nulling at the specific STAs 240. Communication controller 215 can control, manage and implement the transmissions (e.g., communications) in accordance with the timing and frequency (e.g., selected channels or bands), as well as in directions or vectors in which partial-rank nulling is implemented.

APs 205 and/or STAs 240 can include communication controllers 215 to facilitate wireless communications with each other. Communication controllers 215 can include and/or utilize wireless communication interfaces, such as hardware and software, including transceivers, antennas, RF interfaces, ports and processing devices facilitating communications via standards, such as 802.11a/b/g/n/ac/ax, Bluetooth, Cellular (e.g., 3G, 4G, 5G), Zigbee, Z-Wave, NFC and others. Communication controllers 215 can control receiving and transmission of signals, data, or messages to facilitate or implement the multi-AP transmissions using coordinated partial-rank nulling.

APS 205 can include nulling functions 220 for implementing nulling per coordinated (e.g., agreed upon) communications between the APs 205. Partial-rank nulling can include any technique or action in array signal processing for suppressing interference from signals from specific directions while preserving signals arriving from other directions. For example, partial-rank nulling can include manipulating the array response to create nulls or zeros in the radiation pattern in interference from a particular direction. Nulling function 220 can include any combination of hardware and software for reducing or cancelling unwanted signals or interference at a receiver (e.g., STA 240), such as by adjusting the phase and amplitude of incoming signals. Nulling function 220 can include any combination of hardware and software for minimizing or reducing an unwanted signal or an interference (e.g., to below an acceptable threshold level), such as without completely eliminating the interference.

Nulling function 220 can include the functionality to measure interference from a particular AP 205 from various receive vectors or directions with respect to the STA 240. Direction can include any path or course along which the transmission signal is moving, oriented, or pointing (e.g., as a vector), and can be specified by its position relative to a reference point or object, such as an AP and/or STA. Nulling function 220 can identify or use measured signals (e.g., sounding signals) from multiple angles, directions or vectors and identify the angle, direction or vector from, along or at which the interference is the lowest or below an acceptable threshold. Nulling function 220 can include or utilize a precoder, such as residing within coordinator 210, to determine the direction or angle along which the interference is lowest or reduced below a threshold.

APS 205 and stations 240 can include antennas 225. Antennas 225 can include any transmission or receive antennas. Antennas 225 can include, or be coupled with, communication chains and/or transceivers implementing the communication, including chains of circuitry (e.g., amplifiers, filters, analog to digital and/or digital to analog converters, processors, signal combiners and other circuitry to facilitate signal transmission or receipt.

APs 205 and stations 240 can communication spatial streams 230 (e.g., spatial streams M of an AP 205 intended for a particular STA 240, or a total number of spatial streams N transmitted by an AP 205). Spatial stream 230 can include any data stream transmitted or received through a separate antenna in a MIMO wireless communication system. For instance, a spatial stream can be transmitted or received on more than one antenna, and multiple spatial streams may share the same set of antennas. For example, each spatial stream when transmitted over multiple antennas can use a unique beamforming vector, which can be different from the vectors used for other spatial streams transmitted over the same set of antennas. Spatial streams 230 can provide or facilitate improved throughput and reliability by using multiple antennas to create distinct data paths. Spatial streams 230 can be suitable for directional control and transmissions with partial-rank nulling.

System 200 can include or use any number of spatial streams 230, including any independent data streams transmitted simultaneously over multiple antennas in a MIMO (Multiple-Input Multiple-Output) system. System 200 can include STAs 240 that can be configured for communicating a wireless network (e.g., WLAN of a BSS 250) to receive and transmit data. System 200 can allow a STA 240 to receive multiple spatial streams 230 simultaneously via one or more receive antennas 225 (e.g., two receive antennas for each STA 240). Each spatial stream 230 can represent an independent data stream transmitted from an AP 205 that can minimize the interference in a number of dimensions/directions. The number of dimensions or directions in which the partial-rank nulling can reduce the interference can be smaller than the number of spatial streams 230 that a STA 240 can receive. For example, if a STA has two receive antennas 225 (e.g., can receive signals in two dimensions or directions), partial-rank nulling can minimize interference along one dimension or direction as seen by the STA 240.

The number of spatial streams 230 that a STA 240 can support can vary based on the capabilities and the MIMO configuration of the network. For example, if a STA 240 has multiple receive antennas 225 and the network is configured for 2x2 MIMO, then STA 240 can receive two spatial streams 230 simultaneously. Each spatial stream 230 can carry independent data, effectively increasing the data capacity and improving the overall throughput, data rates, increased system capacity, and/or wireless network reliability.

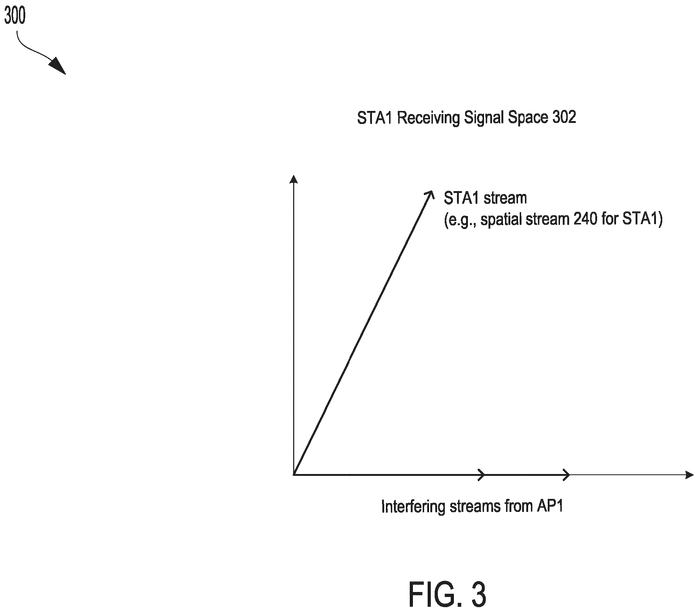

Referring now to FIG. 3, an example of a plot 300 of a signal-space 302 for received transmissions by a STA 240 in an aspect of the technical solution. As shown in plot 300, station 240 (e.g., STA1) having a total of K=2 receive antennas 225 can receive a total number of N=3 spatial data streams 230 transmitted by an AP 205 (AP1). STA1 can be within the BSS 250 of the transmitting AP1 205 and can receive all of 3 spatial data streams 230 transmitted by AP1, even though only one of those spatial data streams 230 are intended for STA1.

For example, AP1 can transmit N=3 spatial streams 230 via a down link (DL) MU-MIMO to multiple STAs 240 within its BSS 250. Of the N=3 total spatial data streams 230 transmitted by AP1, M=1 streams (e.g., a single spatial data stream 230, where M<N) can be intended for STA1. While plot 300 shows STA1 stream (e.g., the stream intended for STA1) directed at an angle away from the X axis, the remaining two spatial data streams 230 (e.g., interfering streams from AP1) are directed along the X-axis. The Y-axis (which is orthogonal or perpendicular to the X-axis) can represent the direction or vector on the signal space 302 of the STA1 along which transmissions are nulled or partially nulled. Accordingly, STA1 stream (being directed at least partially along the Y-axis) can have an interference below a threshold in at least one direction and can therefore be received by the STA1. For example, STA1 stream can be free from interference at least in one direction.

In the example of FIG. 3, receiving station 240, such as the STA1, can have any number of K receive-antennas 225, such that M < K < N, where M corresponds to a total number of data streams intended for the receiving station 240 and N corresponds to a total number of data streams transmitted by the AP 205 to any number of recipients. In plot 300 example, N = 3, M = 1 and K = 2. In such a scenario, for STA1 240 to be able to decode its own M intended spatial-streams 230, AP1 205 can beamform the transmitted spatial-streams such that the signal strength from the interfering streams (e.g., N-M=2 streams aligned with the X-axis) have their signals at the STA1 minimized over a set of M linearly-independent directions as received at STA1 240. M intended streams 230 can be recovered by STA1 240 by projecting them away from the X-axis, as shown by STA1 stream.

AP1 205 can include appropriately constructed long-training fields (LTFs) in its transmissions so that STA1 240 can estimate both i) the directions of its M intended streams, as well as (ii) the M distinct directions in which the interference is minimized. The technical solution can include or provide a framework for a scenario in which any number of APs 205 performing partial-rank nulling towards any number of STAs 240. For instance, when two APs 205 are utilized, prior to implementing coordinated-transmissions, a first AP 205 (e.g., AP1) and a second AP 205 (e.g., AP2) can execute a coordination (e.g., during a coordination phase) in which messages can be exchanged between AP1 and AP2 to identify each receiving STA for which the interference is to be fully or partially nulled. For example, the APs 205 can identify a STA 240 with more receive antennas than its intended spatial streams (e.g., antennas K=2, while received streams N = 10, of which only M=1 is intended for the STA).

Such identified STA can include an interference seen from the OBSS AP to be significant enough to include nulling (e.g., STA can have interference signal strength or power that is above a particular threshold). For example, the threshold can include a level of the background signal noise, or a factor of 2, 3, 4, 5, 10 or more of the level of the background noise. The threshold can be, for example, defined in reference to other signals, such as signal strengths, amplitude or power of received intended streams (e.g., 1/2, 1/3, 1/4, or 1/8 of the intended received spatial stream's signal strength, amplitude or power).

For each STA that is identified to have its interfering streams be partially nulled, the AP1 and AP2 can identify a set of linearly independent receive-directions in which the interference from both APs is to be minimized. Linearly independent receive directions can include distinct and non-correlated paths, directions or channels through which signals can be received by multiple receive antennas 225. AP1 and AP2 can change such a set of directions dynamically from one coordinated transmission to the next depending on: i) other receiving STAs, as well as ii) the number of spatial streams intended for each STA.

Once the set of directions are identified, the AP1 and AP2 can commence coordinated transmission that is synchronized in both time and frequency. For instance, out of a total number N1 spatial streams transmitted from AP1, a subset of M1 spatial streams can be intended for STA1 having a K1 number of receive-antennas. The configuration can include M1 spatial streams intended for STA1 that is less than the number of K1 receive-antennas and which are also less than the total number of N1 spatial streams from the AP1 (e.g., M1 < K1 < N1). Likewise, of the N2 streams transmitted from AP2, M2 streams can be intended to STA2 having K2 receive-antennas can be such that M2 < K2 < N2. In such a configuration, both STA1 and STA2 can be selected, determined or configured to have partial-rank nulling implemented upon them by the AP1 or AP2. AP1 or AP2 can coordinate their data stream transitions in time and frequency, using beamforming to directions at which partial-rank nulling is to be performed to reduce interference and allow simultaneous transmissions.

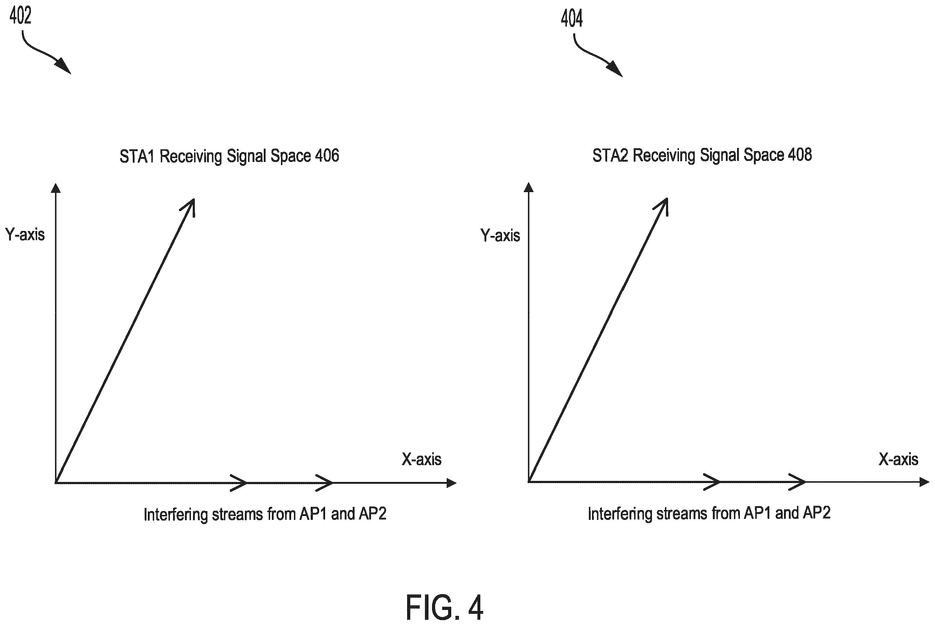

Referring now to FIG. 4, example plots 402 and 404 are illustrated of receiving signal spaces 406 of STA1 and 408 of STA2 which are recipients of transmissions by AP1 and AP2 implementing coordinated partial-rank nulling in a multi-AP transmission example. FIG. 4 can correspond to an instance in which the present technical solutions utilize two APs 205, such as those illustrated in FIG. 2. APs 205 can apply appropriate beamforming vectors to their respective spatial streams 230 to transmit streams at least along the specified directions or vectors as received by the intended STAs, such that the same streams will be partially or fully nulled along the specified directions at the unintended receiving STAs. For example, the beamforming vectors applied to spatial streams can be such that the interference from both AP1 and AP2 is minimized over a set of M1 independent receive-directions at STA1 as pre-agreed during the coordination phase. The M1 intended streams for STA1 can be recovered by projecting the streams in such determined M1 directions. For example, the same can be applied for STA2, with a corresponding set of M2 directions for the STA2. The AP1 and AP2 can include appropriately constructed long-training fields (LTFs) in the coordinated-transmission so that STA1, STA2 can estimate both i) the directions of their respective intended streams, as well as (ii) the directions in which the interference from AP1 and AP2 is minimized.

AP1 and AP2 can each transmit a total number of N = 2 spatial streams 230 of which only M = 1 spatial stream 230 is intended for receipt by the STA 240 of the respective transmitting AP 205's own BSS 250, where each receiving STA 240 includes K =2 receiving antennas 225. For example, for STA1, the remaining one spatial stream from AP1 and both spatial streams from AP2 can produce interference to be partially nulled. As illustrated, a total of 3 spatial streams are partially nulled (e.g., aligned with X-axis or X direction in FIG. 4).

As shown in plot 402, interfering streams 412 from AP1 and 414 and 416 from AP2 are directed along the X direction of STA1 receiving signal space 406, and are eliminated or minimized along the Y direction, while intended stream 410 of AP1 is directed along a different direction (e.g., closer to, or more closely aligned with, the Y direction) and therefore is not eliminated or minimized along the Y-axis or Y direction and received by STA1. For example, Y-axis, also referred to Y direction, can be orthogonal or perpendicular to the X-axis, also referred to as X direction. For example, STA1 receiving signal space allows for intended spatial streams to be received at STA1 when such streams have a component in Y direction that is greater than a threshold. For example, the threshold can up to 5% of the total received signal strength of the intended spatial stream. For example, the threshold can be up to 5%, 10%, 15%, 20%, 30% or greater than 30%, depending on the design.

Similarly, as shown in plot 404, interfering streams 410 and 412 from AP1 and 416 from AP2 are directed along the X direction of STA2 receiving signal space 408, and their signals are also minimized or eliminated along the Y direction, while intended stream 414 from AP2 is directed along a different direction (e.g., closer to, or more closely aligned with, the Y-axis) and therefore is not eliminated or minimized along the Y direction and received by the STA2. In some implementations, AP1 and AP2 can transmit streams 410, 412, 414 and 416 simultaneously in the presence and range of STA1 and STA2 and interferences and non-interferences of the streams can occur at the same time. Accordingly, the AP1 and AP2 can simultaneously and in a coordinated fashion (e.g., at the same time and frequency) transmit spatial streams to their own respective STAs 240, using partial-rank nulling to prevent interferences to non-intended STAs 240.

In one example, as a part of the coordination phase, the APs 205 (e.g., AP1 and AP2) can exchange information on the precoder-algorithm to be used in computing the beamforming vectors for each STA 240 (e.g., STA1 and STA2) to achieve partial-rank nulling. For example, as a part of the coordination phase, the APs 205 can exchange information, data or description of the direction-vectors in which interference is to be minimized at each STA's receiving antennas 225. For example, as a part of the coordination phase, a single AP 205 can compute the beamforming vectors for all the spatial streams and shares these with the other participating APs.

Using the information exchanged in the coordination phase, the receive-directions in which to minimize interference for each STA 240 can be determined or generated based on, or using, policies, such as policies specified in the standard. The choice of the policy can be fixed as a "default" implementation or can be decided based on the capabilities of the APs 205 and/or the STAs 240. For example, a policy can include for a STA receiving M intended spatial-streams from the AP 205 of its own BSS 250, an interfering AP 205 minimizing interference along the M directions at that STA's receiver corresponding to the M strongest eigen-modes of the channel between the STA 240 and its AP 205 (e.g., AP 205 of STA's own BSS 250). For example, a policy can include, for a STA receiving M intended spatial-streams from the AP of STA's own BSS, an interfering AP 205 minimizing interference along the M directions at that STA's receiver that correspond to the M strongest eigen-modes of the channel between the STA 240 and the interfering AP 205.

For example, as a part of the coordination phase, AP1 and AP2 can each perform channel-sounding to STA1 and STA2. Each STA 240 can measure the MIMO channel from each sounding AP 205 and can provide a response including the measurements. The relative phase-offsets across receive antennas for a STA 240 can be maintained at constant values when measuring channels from different APs.

During the coordination phase, different independent variants and their combinations can be implemented. For example, a STA 240 can feed back estimates of the MIMO channel from a sounding AP in a compressed-beamforming report format (CBR), such as the one defined in 802.11. For example, a STA 240 can feed back estimates of the MIMO channel from a sounding AP in Cartesian-form. For example, for an AP 205 from another BSS 250 than the BSS 250 of the STA, (e.g., an interfering AP), STA 240 can feed back a linear transformation of the MIMO channel from that AP 205. The linear transformation can be determined by the previously measured MIMO channel between the STA and its self-BSS AP. For example, linear-transformations could represent projection onto one or more eigen-modes of the MIMO channel measured between the STA 240 and its self-BSS AP 205. For example, for a sounding AP 205, a STA 240 can feed back the preferred set of M directions in which the corresponding AP can minimize interference if the STA 240 is receiving M intended spatial streams from its self-BSS AP 205.

As part of the coordination phase, the APs 205 (e.g., AP1 and AP2) can jointly perform channel-sounding to STAs 240. APs 205 can jointly transmit a null-data-packet (NDP) which can be synchronized in time/frequency. The total number of sounding dimensions in the NDP can equal to the total number of antennas 225 across the APs 205. The jointly transmitted NDP can be preceded by one or more NDP announcement (NDPA) frames. For example, a single AP 205 can transmit an NDPA on behalf of all the APs, to STAs across BSS 250 that are to be sounded. For example, all the APs 205 cam transmit their NDPAs sequentially, with each AP's NDPA addressing the STAs 240 within their own BSS 250. For example, all APs 205 can transmit their NDPAs at the same time, but separated in frequency (e.g., via OFDMA), with each AP 205 addressing the STAs 240 within their own respective BSSs 250. The coordinated transmission can be preceded by a trigger frame transmitted by one of the APs 205. Based on the trigger frame, all the participating APs 205 can synchronize their carrier-frequency offsets (CFO) relative to the AP 205 that transmitted the trigger frame and synchronize the start-time of their coordinated transmissions.

### B. Multi AP coordination per CBF TXOP frame sequence with pre-station feedback scheduling

The technical solutions of the present disclosure can include multi AP coordination per CBF TXOP frame in which an initial scheduling consensus between the APs can be established prior to the ICR feedback from the stations, while allowing the APs to adjust the scheduling based on updated station information from subsequent ICR station messages. For example, the technical solutions can utilize an initial control frame (ICF) sent by a first (e.g., initiating) AP to a second AP and to the stations of the first AP (STAs) to initiate CBF synchronization. The STAs of the first AP can respond with their initial control responses (ICRs) to this ICF, while the second (e.g., the responding) AP can send the CBF response along with the ICF for the STAs of the second AP, allowing for a preliminary consensus to be reached between the first AP and the second AP on schedules and determinations for CBF communications, including information on STAs which these APs expect are going to participate, and all of this can be done prior to the ICRs being received from the STAs.

The STAs of the second AP can then reply with their ICRs to the ICF of the second AP. The first AP can transmit another ICR to update any information on the STAs of the first AP, such as corrections to any prior assumptions on participation, availability or parameters of these STAs. The information from the ICRs of the first and second AP STAs can be used by the first AP to generate updated scheduling and determinations for coordinating or synchronizing CBF transmissions. The first AP can then generate a CBF trigger that can include the updated information, including updated information on participating STAs, their updated parameters and the scheduled timing for initiating and implementing the CBF PPDU transmission among the devices.

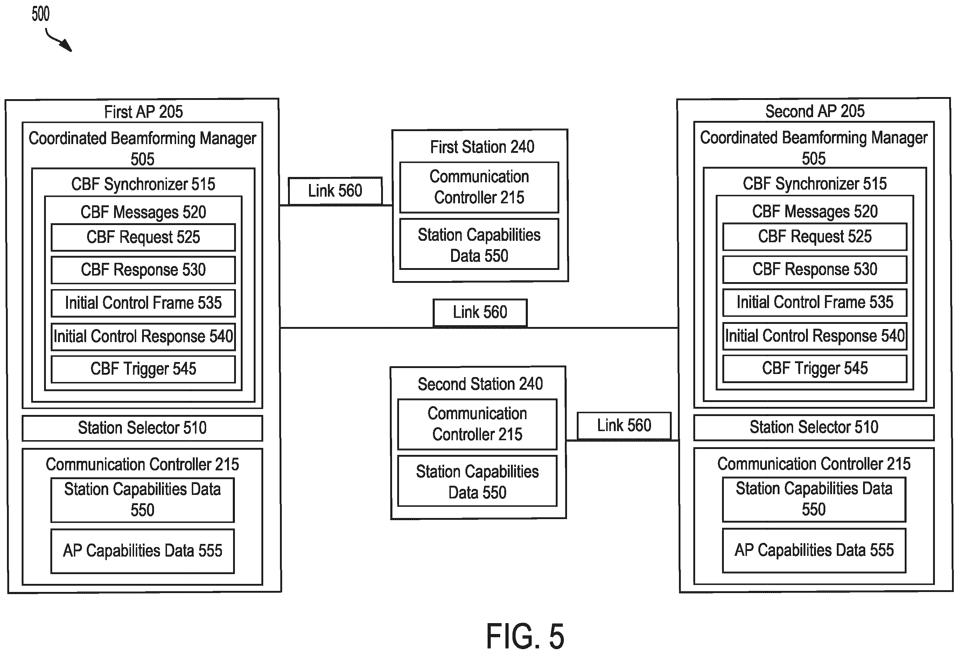

FIG. 5 is an example block diagram of a system 500 for a multi-access-point coordination per CBF TXOP frame sequence. Example system 500 can incorporate, utilize or include any features or functionalities of a system 200 or example features 300 and 400, and vice versa. System 500 can include one or more APs 210 in wireless communication with one or more stations (STAs) 240 and one or more APS 210 via one or more links 560. For example, a first AP 210 can be in a wireless communication via the links 560 with one or more stations, such as a first STA 240, which can be in first AP's BSS 250. Furthermore, a second AP 205 can be in a wireless communication via the links 560 with one or more stations, such as a second STA 240, which can be in second AP's BSS 250. The first AP 205 and the second AP 205, as well as any additional APs 205 described herein, can be in wireless communication with each other via the one or more links 560, to coordinate CBF between each other and with respect to any stations 240 with which they communicate, including the first and second stations 240, or any other stations 240 serviced by any of the APs 205. Despite FIG. 5 illustrating two APs 205 and two STAs 240, it is appreciated that the systems and methods described herein can be applicable to any number of APs 205 and STAs 240. Each AP 205 (e.g., first AP 205, second AP 205), can include at least one coordinated beamforming manager 505 (CBFM 505), at least one station selector 510, and at least one communication controller 215.

The coordinated beamforming manager, also referred to as a CBFM 505, can include hardware and software for establishing, managing, and operating CBF operations. The CBF operations can include channel state information (CSI) acquisition, CSI exchange, beamforming weight calculation, transmission coordination, among other operations. The CBFM 505 operations can include, for example, communications or exchange of messages for synchronizing CBF communication, such as exchange (e.g., sending or receiving) of CBF messages 520, including CBF requests 525, CBF response 530, initial control frames (ICFs) 535, initial control response (ICRs) 540 or CBF triggers 545. For example, the CBFM 505 of the first AP 205 can execute a CSI acquisition of the first station 240 and the second AP 205. The CBFM 505 can include at least one CBF synchronizer 515. The CBF synchronizer 515 can synchronize, coordinate, or otherwise align each AP 205 when executing a CBF PPDU transmission. The CBF PPDU can correspond to the transmission of a PPDU to employ the CBF operations or techniques. The CBF synchronizer 515 can utilize frames and parameters for the plurality of CBF messages 520.

The CBF synchronizer 515 can include any combination of hardware and software for synchronizing or negotiating CBF communications. The CBF synchronizer 515 can include computer code, instructions or data for exchanging communications with other (e.g., remote) APs 205 or stations 240 of the same or different BSS 250, such as to facilitate negotiation or synchronization of timing or the configuration of CBF communications. The CBF synchronizer 515 can include, generate, transmit or receive one or more CBF messages 520 for communication with any one of the APs 205 or stations 240, via the links 560. The CBF messages 520 can include information associated with the CBF PPDU transmission of a respective AP 205. Each CBF message 520 can correspond to at least one of a CBF request 525, a CBF response 530, an initial control frame 535 (ICF 535), an initial control response (ICR 540), or a CBF trigger 545. Each CBF message 520 transmitted between the participating devices (e.g., APs 205 and STAs 240) can be separated by a SIFS, to provide a time duration or delay interval between the transmissions. SIFS (Short Interframe Space) can include a short time interval (e.g., 16us) used in wireless communication protocols to allow for timely receipt of acknowledgments and synchronization between transmissions. For instance, prior to a CBF PPDU transmission of the first AP 205, the CBFM 505 can trigger the CBF synchronizer 515 to transmit a CBF message 520 to the second AP 205. The CBF message 520 can be preceded by a SIFS, temporally separating it from a preceding CBF message 520 and can also be followed by a SIFS, separating it from the CBF transmission (e.g., CBF PPDU) to be transmitted.

CBF request 525 can be any message or transmission used to initiate coordinated beamforming (CBF) communications between APs 205 and stations 240. The CBF request 525 can include, for example, a message sent by a first (e.g., initiating) AP 205 to a second (e.g., recipient) AP 205 and the STAs 240 of the initiating AP 205, signaling the start of a transmission opportunity (TXOP) for CBF coordination. The CBF request 525 can include information on participating STAs 240, such as their identifiers and expected parameters for CBF (e.g., station capabilities data 550, including for example number of spatial streams, transmission power, beamforming weights, timing synchronization, and channel state information). The CBF request 525 can act as an initial control frame (ICF) 535 sent and be configured to request or gather and convey information for CBF coordination to the second AP and its own STAs 240. The CBF request 525 can be transmitted by the first AP at the beginning of the TXOP to initiate the CBF synchronization or coordination process.

For example, a CBF request 525, also referred to as a CBF-req, can signal the termination of CBF-TXOP if no stations of the first AP (e.g., AP1-STAs) are available for a particular TXOP (e.g., a Msg4 in post-station feedback scheduling). The CBF request 525 can indicate 'N' candidate STA-groups (e.g., N = 3), of which one group can be selected for a particular upcoming or current TXOP. Each group can identify a specific combination of the stations of the first AP (e.g., AP1-STAs) and the stations of the second AP (e.g., AP2-STAs), which can be limited to 4 STAs in total, splitting the participation, for example, as 2 STAs per each AP. Example signaling options can include AID per STA (e.g., 11 bits), "Short-AID" per STA, represented with fewer bits (e.g., 6 bits), and with pre-negotiated/defined mapping to AID, or Group-ID (e.g., 8 bits) with pre-negotiated/defined mapping to a specific combination of AP1-STAs and AP2-STAs (e.g., similar to VHT GID). Additional info signaled per group can include one or more of: Nss per STA (e.g., 1 or 2 bits), MCS info per AP1-STA (e.g., 6 bits), RU indication (e.g., 9 bits), and max payload duration (e.g., number of payload symbols not including padding) that can be supported by AP1 (e.g., 9 bits). Common info to all STA-groups, such as Bandwidth (e.g., 3 bits) and Puncturing (e.g., 5 bits), can be signaled in the Common Info and/or Special User Info fields of the trigger frame containing CBF-req. It may additionally include transmission info (e.g., MCS, Nss, RU allocation, etc.) for AP2 to transmit a response in the ensuing PPDU (e.g., TB-PPDU or non-HT DUP PPDU).

For example, CBF request 525 (e.g., the CBF-req) can signal the termination of CBF-TXOP if no AP1-STAs are available for the current TXOP (e.g., a Msg4 in post-station feedback scheduling). For example, CBF request 525 can indicate information for 'N' AP1-STAs (e.g., N=2) participating in this C-BF TXOP. The signaling options include AID of participating AP1-STAs (e.g., 11 bits per STA), or "short-AID" (represented with fewer bits e.g., 6 bits per STA) with pre-negotiated/defined mapping to AID. CBF request 525 can include the number of spatial streams (e.g., the spatial stream limitation), such as Nss, for each participating AP1-STA (e.g., 1 or 2 bits per STA), RU indication (e.g., 9 bits), BW (e.g., 3 bits), and Puncturing (e.g., 5 bits), which can be signaled in the Common Info and/or Special User Info fields of the trigger frame containing CBF-req. The CBF request can specify the max number of participating AP2-STAs (e.g., 2 or 3 bits) allowed for the next CBF transmission in this TXOP and the max total Number of Spatial Streams (Nss) allowed for AP2-STAs (e.g., 2 or 3 bits) for the next CBF transmission in this TXOP. The CBF request can include transmission info (e.g., MCS, Nss, RU allocation data) for AP2 to transmit a response in the ensuing PPDU (e.g., TB-PPDU or non-HT DUP PPDU).

CBF response 530 can be any message or transmission used to respond to a CBF request 525 and provide feedback on CBF coordination. The CBF response 530 can include, for example, a message sent by the second AP 205 to the first AP 205 and its STAs (e.g., the STAs of the second AP), indicating the second AP's participation in the CBF process. The CBF response 530 can include information on participating STAs 240 of the second AP 205, such as their availability, duration, and necessary parameters for CBF coordination (e.g., number of spatial streams (Nss), modulation and coding scheme (MCS) index, transmission power, beamforming weights, timing synchronization, and channel state information). The CBF response 530 can be responsive to the CBF request 525 or the ICF 535 sent by the first AP. The CBF response 530 can be configured to provide the first (e.g., the initiating) AP 205 with the requested information to establish, determine, produce, modify or update the scheduling or synchronization of the CBF transmissions, such as any information the responding AP 205 has on the STAs 240 of the responding AP 205.

For example, the CBF response 530, also referred to as the CBF-resp, can signal or indicate whether the transmitting AP (e.g., AP2) is going to participate in the current CBF TXOP. If the AP2 is to participate, or if the CBF response is being sent in response to a preceding CBF-req in this same TXOP (e.g., from the AP1), then the CBF-resp can signal the preferred group among those signaled in CBF-req. For instance, the CBF response 530 can indicate or signal the preferred group of stations to participate in the CBF, from a list of choices provided in the ICF (e.g., CBF request) from the first AP (e.g., AP1). The CBF response 530 can indicate or include max payload duration (e.g., number of payload symbols not including padding) that can be supported for the group by AP2 (e.g., 9 bits) and relevant info for each AP2-STA in the group (e.g., MCS) that needs to be included in the preamble of the CBF PPDU. The CBF response 530 can indicate or include the amount of nominal padding (e.g., 0us, 8us, 16us or 20us) required by AP2-STAs in the group. The CBF response 530 can include transmission info (e.g., MCS, Nss, RU allocation, etc.) for AP1 to transmit a response in the ensuing PPDU (e.g., TB-PPDU or non-HT DUP PPDU).

For example, the CBF response 530 (e.g., the CBF-resp) can indicate or signal whether the transmitting AP (e.g., the AP2) will participate in this CBF TXOP, and if so, it can signal the list of 'M' (e.g., M=2) AP2-STAs participating in this CBF TXOP. The signaling options can include AID (e.g., 11 bits) of each participating AP2-STA, or "short-AID" (represented with fewer bits e.g., 6 bits per STA) with pre-negotiated/defined mapping to AID. The CBF response 530 can include data on MCS (e.g., 6 bits) and Nss (e.g., 1 or 2 bits) for each participating AP2-STA, and max payload duration (e.g., number of payload symbols not including padding) that can be supported by AP2 for the participating AP2-STAs (e.g., 9 bits). The CBF response 530 can include transmission info (e.g., MCS, Nss, RU allocation, etc.) for AP1 to transmit a response in the ensuing PPDU (e.g., TB-PPDU or non-HT DUP PPDU).

Initial control frame (ICF) 535 can be any message or transmission for control and coordination of CBF communications between APs and STAs. The ICF 535 can include a message sent by the first AP to the second AP and its STAs to initiate the TXOP for CBF coordination, including multi-user request to send (MU-RTS) or buffer-status-report-poll (BSRP) transmissions. The ICF 535 can include information to be used by the CBF synchronizer 515 for establishing a preliminary schedule or determinations for CBF communications, such as the participating STAs and their expected parameters (e.g., transmission power, beamforming weights, timing synchronization, and channel state information). The preliminary schedule can include at least one of a modulation coding scheme (MCS) for one or more STAs, Nss for one or more STAs, grouping or ordering of each participating STA, duration of the CBF transmission, and parameters signaled in the CBF preamble. As described herein, the final schedule prior to the CBF PPDU transmission can include the same parameters for the preliminary schedule. For example, the preliminary schedule can include one or more MCS settings for each of the STAs 240 participating in the CBF TXOP. To establish the one or more MCS settings, the CBF synchronizer 515 can utilize conditions such as, the distance, interference, and obstacles between each STA 240, the downlink channel state information (CSI) for each participating STA 240 in a CBF TXOP, the type of interference-nulling (i.e., whether partial-rank or full-rank) for each participating STA 240 in a CBF TXOP, or the number of spatial streams (Nss) allocated to each participating STA 240 in a CBF TXOP. By utilizing conditions, the CBF synchronizer 515 can establish the one or more MCS settings to dynamically adapt the MCS for each STA 240 using link adaptation.

The ICF 535 can be responsive to a determination that CBF synchronization and coordination is to be initiated (e.g., in response to data to be transmitted). The ICF 535 can operate by signaling the start of the CBF process and gathering necessary information from the STAs and the second AP. The ICF 535 can be transmitted by the first AP at the beginning of the TXOP to initiate the CBF process (e.g., as a CBF request 525). Examples of the TXOP can include at least one of CBF, Wi-Fi QoS, Multi-User Transmission, High Thruput Wi-Fi, among other TXOP. The second AP 205 can transmit the ICF 535 to each second STA 240 and the first AP 205 to notify of an upcoming TXOP. The second AP 205 can transmit, responsive to a first ICF 535 transmitted by the first AP, a second ICF 535 to each second STA 240 to notify of an upcoming CBF TXOP. The notification can indicate a time interval for which the first AP and the second AP can have access to transmit data packets or data to one or more stations of the first AP and one or more stations of the second AP uninterrupted (e.g., by means of one or more CBF transmissions). The notification can indicate a time interval for which the second STAs 240 can have access to transmit data packets or data to the second AP uninterrupted. The ICF 535 can allow the second STAs 240 to transmit a plurality of frames within the allocated time. The notification of the ICF 535 can indicate that the upcoming TXOP is a CBF TXOP by using action frames, duration fields, control frame signaling (e.g., MU-RTS, BSRP, Null Data Packet Announcement, CBF report), QoS TXOP Management, frame sequence, among others. For example, the CBFM 505 can include a NDPA frame (e.g., indicate the start of CBF feedback), NDP frame (e.g., sounding), and a CBF feedback frame to provide CSI to indicate the TXOP is a CBF TXOP.

Initial control response (ICR) 540 can be any message or transmission used to respond to an initial control frame (ICF) 535 and provide feedback on CBF coordination, including an indication of ability to participate, availability to participate, or duration of communication in the CBF TXOP. The ICR 540 can be any message sent by the STAs of the first and second APs to their respective APs, indicating their availability and parameters for CBF coordination. The ICR 540 can include information on the availability, duration, and parameters of STAs 240 for CBF coordination. The parameters can include, for example, information or values for transmission power, beamforming weights, timing synchronization, and channel state information. The ICR 540 can be responsive to the ICF 535 sent by the first AP 205 or the second AP 205. The ICR 540 can operate by providing the APs with the necessary information to update their scheduling and synchronization for CBF transmissions. The ICR 540 can be transmitted by the STAs of the first and second APs after receiving the ICF 535 from their respective APs.

CBF trigger 545 can be any message used to signal the start of CBF transmissions and synchronize the participating APs and STAs. The CBF trigger 545 can be a message sent by the first AP to the second AP to include any updated information and scheduling (e.g., per ICR feedback from STAs 240, or per feedback from the second AP) to initiate the CBF PPDU transmission according to the latest parameters and data (e.g., and per updated transmission schedule). The first (e.g., the initiating) AP 205 can generate an updated transmission schedule with updated transmission timing per information in ICRs received from the STAs 240 or the CBF response from the non-initiating AP, following the CBF response from the non-initiating AP 205 responsive to the ICF of the initiating AP 205. The CBF trigger 545 can include updated information on participating STAs (e.g., per-STA MCS, per-STA Nss, etc.), parameters of CBF transmission(e.g., duration or length of transmission, Bandwidth, puncturing info, guard-interval, symbol duration, number of long-training-field (LTF) symbols, LTF-type, pre-forward error correction (e.g., pre-FEC) padding factor, error-correcting code for data reliability (e.g., LDPC extra symbol), packet extension (PE) disambiguity (e.g., duration and presence of packet extension field at the end of a PPDU), transmission power, beamforming weights, timing synchronization, or channel state information), or the scheduled timing for the CBF PPDU transmission (e.g., transmission power, beamforming weights, timing synchronization, and channel state information). The CBF trigger 545 can be responsive to the preliminary scheduling consensus and any updated information from the ICRs received from the STAs 240 or from the CBF response received from the non-initiating AP, following the initial scheduling. The CBF trigger 545 can operate by signaling the start of the CBF PPDU transmission and ensuring synchronization among the participating APs and STAs. The CBF trigger 545 can be transmitted by the first AP after updating its scheduling and synchronization information based on the ICRs received from the STAs 240 of the first or second APs 205.

The CBF trigger 545 can be transmitted prior to CBF PPDU (e.g., SIFS before) and can perform one or more of the following functions in preparation for CBF PPDU transmission: provide the preamble contents for CBF transmission, assist the receiving-AP in synchronizing timing/frequency-offset with the transmitting-AP, or signal the cancellation of CBF-TXOP if the transmitting AP is unable or does not intend to participate any more. The CBF trigger 545 can include the following preamble contents for CBF PPDU: "Common" info (i.e., common/shared across STAs), such as one or more of L-SIG length, Bandwidth, puncturing info, GI+LTF, number of LTFs, pre-FEC padding factor, LDPC extra symbol, PE disambiguity, etc., similar to what is present in the Common Info and Special User Info fields of trigger frames addressed to STAs. In addition, the CBF trigger 545 can include an indication of the MCS used for encoding a portion of the CBF preamble with variable MCS, the number of symbols in the portion of the CBF preamble with variable MCS, or the number of STAs serviced by the CBF PPDU. The values of certain parameters may also be pre-negotiated between the APs, such as one or more of BSS color, TXOP duration, GI+LTF, pre-FEC padding factor, LDPC extra symbol, or Spatial Reuse. Such parameters with pre-negotiated values may not be signaled/included in the CBF trigger 545. Additionally, the CBF trigger 545 can include per-STA info, such as one or more of MCS, Nss, Spatial configuration, and Coding. The CBF trigger 545 can indicate the order in which user-fields appear in the preamble of the CBF PPDU. The CBF trigger 545 can indicate the order in which each STA's spatial-streams appear in the preamble and payload of the CBF PPDU. The CBF trigger 545 can also include padding (e.g., as pre-negotiated between AP1 and AP2) to provide the receiving AP additional time to process the CBF trigger 545 contents frame and prepare for any upcoming transmission.

The CBF synchronizer 515 can include various CBF request 525 and CBF response 530 functionality to initiate or response to initiation of the CBF synchronization between APs 205. The CBF synchronizer 515 can configure or generate the CBF requests 525 or CBF response 530 to include any information, data, parameters, specifications, signals, indications, among other forms of data for indicating, coordinating CBF PPDU transmissions. The CBF request 525 and the CBF response 530 can indicate an initial control frame 535 (ICF 535) for the APs 205 or the STAs 240. The ICF 535 can occur at the beginning of the CBF message 520 to indicate, identify, or otherwise establish parameters, specifications, metrics, or signals for the transmission of the CBF PPDU via the links 560. The ICF 535 can trigger or otherwise initiate communications between the first AP 205 and the first STA 240 or between the first AP 205 and the second AP 205. The ICF 535 can include messages, transmissions, or data structures that include information for CBF operations, including any transmissions or messages exchanged between APs 205 or between APs 205 and STAs 240 during CBF setup or coordination. The ICF 535 can include and carry data such as the station capabilities 550 or the AP capabilities data 555. The ICF 535 can include any one or more of: one or more multi-user request to send (MU-RTS) frames, one or more buffer status report poll (BSRP) frames, one or more synchronization signal block (SSB) frames, or paging frames that can be addressed to STAs 240 participating in CBF TXOP. The MU-RTS/BSRP can perform the function of an ICF 535 and initiate the synchronization process between the devices (e.g., APs 205 and STAs 240). The ICF 535 can perform functions involving EMLSR, IDC, power-save, as well as signal to the STAs 240 of the AP and to the other APs 205 the intention or preliminary determination that the initiating AP 205 is to communicate using CBF in the current or upcoming transmission opportunity (TXOP).

The CBF synchronizer 515 can include the functionality to configure a multi-user request to send (MU-RTS) to facilitate or trigger communications from multiple devices (e.g., multiple STAs 240) in accordance with reserved or coordinated time slots in a transmission period. For example, a buffer status report poll (BSRP) can include a transmission to request a buffer status information on the amount of data of a station queued for transmission (e.g., a buffer size, queue status or priority information). For example, asynchronization signal block (SSB) can include a broadcast by the APs 205 to provide initial synchronization and access information.

CBF synchronizer 515 can include any functionality for generating, establishing or updating schedules for synchronized or coordinated CBF communication. A schedule can be any plan, structure or information for coordinating or synchronizing CBF communications among participating devices, including any participating APs 205 and STAs 240. The schedule can include data identifying each participant and any time interval in a CBF PPDU transmission for that participant or its data. The schedule can include a preliminary schedule initially established between two or more APs 205 based on the initial control frame (ICF) and initial control responses (ICRs) or CBF-request and CBF-response, such as including data on STAs and APs which the APs 205 can determine are expected to participate. Schedule can include an updated schedule that incorporates feedback from the participating STAs or APs, as well as adjustments made in response to the absence of communication from participants, which can in such circumstances (e.g., when they do not respond for longer than a predetermined time duration) be determined to be not participating in the CBF TXOP. The schedule can include information such as transmission timings, participating STAs, their parameters (e.g., MCS, Nss, Coding (LDPC or BCC), amount of pending data or en-queued traffic (e.g., data that has been added to a queue for processing), nominal padding requirements, duration of station availability), transmission parameters (e.g., duration or length of transmission, Bandwidth, puncturing information, symbol duration, number of long-training-field (LTF) symbols, GI+LTF type, pre-FEC padding factor, LDPC extra symbol, PE disambiguity, transmission power, beamforming weights, timing synchronization, or channel state information), and any parameters or data for synchronizing communication. The schedule can include data for controlling the timing and coordination of CBF transmissions, including timing for individual participants to transmit their data, allowing for reduced phase misalignments and optimizing beamforming efficiency.

Stations 240 can include the functionality to receive ICFs 535 from APs 205 and generate responses, such as initial control responses (ICRs) 540. For instance, when a CBF message 520 is received by a STA 240, the STA 240 can utilize a communication controller 215 to respond to the CBF message 520 by transmitting an ICR 540 providing to the requesting AP 205 any information requested, such as current or future availability for CBF TXOP, duration of availability, available bandwidth for receiving CBF transmissions, or transmission parameters, including MCS, Nss, or allocated RU information. The communication controller 215 can use the ICR 540 to indicate, establish, or otherwise acknowledge the reception of the ICF 535 and provide additional or requested information for the CBF PPDU transmission. Upon acknowledgement of the ICF 535, the ICR 540 can trigger the STA 240 to initiate preparation for receiving the CBF PPDU, such as re-enabling receiver functions previously disabled (e.g., due to being in a power-save state), or blocking any functions that may disrupt future reception (e.g., channel-switch, power-save, or any scheduled transmissions on the same or a different link). The CBF trigger 545 can initiate, trigger, or otherwise cause coordinated beamforming for the antennas 225 of the APs 205 and the STAs 240 by optimizing signals to direct radio waves at maximum signal strength while minimizing interference of unintended STAs 240. The first AP 205 can transmit the CBF trigger 545 to each participating device (e.g., second AP 205, first STA 240, second STA 240) involved with the CBF PPDU transmission.

Each AP 205 can include one or more station selectors 510 to select, determine, or otherwise identify STAs 240 for selection of the CBF operations. The station selector 510 can include any combination of hardware and software for identifying and selecting suitable stations 230 within a range 255 of an AP 205. The station selector 510 can include the functionality to select stations 240 within one or more BSSs 250 to participate in CBF. Station selector 510 can utilize any combination of station capabilities data 550 or AP capabilities data 555 to select suitable candidate stations 240 based on various capabilities, such as the number of antennas, bandwidth support, and nulling capabilities of APs or candidate stations, which can be used to determine suitability of the stations 240 for participation in CBF operations. For instance, station selector 510 can identify STAs 240 capable of supporting CBF based on their reported capabilities exchanged during the CBF setup process between the APs 205. For example, station selector 510 can utilize traffic characteristics, such as information on downlink data traffic at the APs 205 for each STA 240 within its BSS 250 or attributes of downlink data traffic available at the AP 205 for each STA 250. The attributes of downlink data traffic can include specific QoS requirements such as maximum allowed latency or minimum necessary data rate or zero packet loss, as well as data traffic that can be intermittent versus continuous. For example, station selector 510 can utilize channel characteristics, such as RSSIs observed at each STA 240 due to transmissions from each AP 205, proximity of a STA 240 to a certain AP 205 versus other APs 205, or downlink channel-state information (DL CSI) at each STA 240 with respect to each AP 205.

The communication controller 215 can include functionalities for managing and facilitating communication exchanges between APs 205 and STAs 240 for CBF establishment and operation. Communication controller 215 can include usage, communication or implementation of sequences and exchanges of ICF 535, ICR 540, AP capabilities data 555 and station capabilities data 550 between APs 205 to coordinate and establish CBF between APs 205. For example, the communication controller 215 facilitate and manage exchanges of ICF 535 between APs 210 and stations 240 as well as between different APs 205 during the CBF setup and data transmission phases.

The CBF synchronizer 515 can include the functionality for generating, constructing or producing a schedule for CBF communications responsive to data or information received from participating STAs 240. For instance, the CBF synchronizer 515 can be configured to hold off or delay generating a CBF communication schedule until ICRs from STAs of each of the participating APs 205 is received, or until CBF response from the non-initiating (responding) AP is received. The CBF synchronizer 515 can be configured to generate the schedule for CBF communication responsive to receiving at least one of, or all of, ICRs from the STAs of the participating APs 205 as identified in the ICF from the initiating AP 205 and the CBF response from the responding AP 205.

The CBF synchronizer 515 can include the functionality to make adjustments to the CBF determinations and scheduling based on updated information from the STAs 240, including any ICR messages from the STAs 240 following the CBF response from the responding AP 205. The CBF synchronizer 515 can include the functionality for making adjustments to the CBF determinations and scheduling based on updated information from the STAs 240. For instance, the CBF synchronizer 515 of the second AP 205 can receive from the second AP STAs 240 one or more ICR 540. These ICRs 540 can include updated information of the STAs 240, which can be used to adjust the preliminary or initial scheduling. Upon reception of the CBF response 530, the first AP 205 can utilize the station capabilities 550 of the ICR 540 from the first STA 240 and the information (e.g., station capabilities data 550 and AP 205 capabilities data 555) to determine whether to generate an abort signal for the CBF TXOP. In some instances, the first AP 205 can transmit a CBF message 520 embedded with the abort signal to the APs 205 and the STAs 240. The abort signal generated by the first AP 205 can cancel or abort the CBF TXOP to prevent resource wastage and reduced performance of the system 500 based on a plurality of factors detected by the first AP 205. The factors can include CSI issues (e.g., incorrect CSI, incomplete CSI feedback), AP 205 or STA 240 malfunctions (e.g., misaligned timing, non-responsive APs 205), interference detection (e.g., external interference, self-interference), network resource allocation (e.g., priority traffic, congestion), among other factors that impact the CBF TXOP. For example, the first AP 205 can generate the abort signal in response to the CBF response 530 from the second AP indicating insufficient power resources for the CBF PPDU. In another example, the first AP 205 can generate the abort signal in response to the first AP 205 detecting a malfunction at the APs 205 and the STAs 240. The first AP 205 can determine whether to generate the abort signal based on the detection of at least one of the above mentioned factors.

For example, responsive to the first AP 205 not detecting one or more parameters or factors from prior transmissions, the first AP 205 can transmit, send, or other provide a CBF adjustment (e.g., CBF request 525) to the second AP 205 to indicate whether the second AP 205 can participate in the CBF TXOP. The CBF request 525 can include the station capabilities data 550 (of the first STA 240 and the first AP 205) and the AP capabilities data 555 of the first AP 205. By transmitting the CBF message 520 to the second AP 205, the APs 205 can communicate beamforming information and parameters to synchronize according to the CBF synchronizer 515. In some instances, the CBF message 520 can be embedded the CBF request 525 upon initiation of the CBF TXOP. For example, the CBF synchronizer 515 can perform a function of the ICF 535 for the first STA 240 within the candidate set of STAs 240 and the second AP 205 for the CBF message 520 addressed to the second AP 205 and the first STA 240. The function can include EMLSR, IDC, power save, among other function for the ICF 535. For instance, the CBF synchronizer 515 can embed the CBF request 525 within the CBF message 520.

The CBF synchronizer 515 can transmit messages providing CBF adjustments from other APs 205. For instance, a CBF synchronizer can generate, transmit, send, or otherwise provide a third message (e.g., CBF adjustment) to the first AP 205 indicating a CBF adjustments which can be provided in the form of an updated CBF response 530 to the CBF request from the first AP 205. The CBF response 530 can indicate the participation of the second AP 205 and the second STA 240 in the CBF TXOP. By transmitting the CBF request and CBF response, the first AP 205 and the second AP 205 can tune the scheduling consensus. The scheduling consensus can correspond to a plurality of entities (e.g., STAs 240, APs 205, antennas 225) that transmit and receive scheduling parameters for the CBF PPDU transmission. The scheduling consensus can provide either AP with the knowledge of which STAs of each AP will participate in the CBF TXOP, and the number of spatial streams intended for each participating STA in the CBF transmission, thereby facilitating the AP to compute beamforming vectors optimally. The scheduling consensus can allow either AP to determine what MCS can be used for its STAs in the CBF transmission. The scheduling consensus can provide either AP with information on what MCS may be used for the other AP's STAs in the CBF transmission. The scheduling consensus can provide either AP with information on the duration of the CBF transmission. The scheduling consensus can provide either AP with a partial or complete indication of the PHY preamble contents and related parameters for constructing the CBF PPDU. The scheduling consensus can allow for each participating entity in the CBF operations synchronize and align regarding the timing of the CBF PPDU transmission to reduce the occurrence of phase misalignments based on the CBF adjustments from the first STA 240 and the second STA 240. Furthermore, using the ICR 540 from the STAs 240 and the parameters of the first AP 205 and the parameters of the second AP 205, the APs 205 can generate the schedule for the CBF PPDU transmission. The schedule can indicate an updated optimal time for the CBF PPDU transmission to synchronize the APs 205 while minimizing interference by the APs 205.

The station capabilities data 550, also referred to as station capabilities 550, can include any data or information on capabilities, settings, and parameters of STAs 240 within APs 205 relevant to the participation of STAs 240 in CBF operations. The station capabilities data 550 can include information such as antenna numbers of STAs 240, bandwidth support corresponding to a station or a channel, downlink CSI (e.g., channel gain, phase information, delay spread, doppler spread, Signal-to-Noise Ratio), received signal strength indicator ( e.g., signal quality, power level), or sounding and nulling capabilities of a STAs 240 including data on whether a station supports particular sounding frames or has an ability to provide or determine CSI. The station capabilities data 550 can include or corresponding to maximum client limits of STAs 240, antenna configurations, nulling capabilities, a type and volume of traffic handled by a station, path loss observations, a role in a network topology (e.g., whether a station is a relay or a primary endpoint), as well as any data on channel conditions, interference levels, data loss or network congestion.

AP capabilities data 555, also referred to as AP capabilities 555, can include any features or attributes that define the performance or functionality of the APs 205. AP capabilities data 555 can include features or attributes pertaining to wireless network communications. For instance, AP capabilities data 555 can include a number of antennas for transmission or receiving of wireless signals supported by APs 205, bandwidth supported by APs 205, sounding capabilities (e.g., joint sounding or separate sounding) supported by AP 205 or nulling capabilities (e.g., full-rank nulling, partial-rank nulling, maximum number of nulling dimensions) supported by APs 205. For example, AP capabilities data 555 can include a maximum number of OBSS stations (e.g., stations that can be a part of a CBF operation) whose information can be stored (e.g., including channel sounding reports). AP capabilities data 555 can include precoder type, such as minimum mean square error (MMSE) or zero forcing (ZF) techniques. AP capabilities 555 can include channel and traffic characteristics utilized to select STAs 240 to participate in the CBF operations. AP capabilities 555 can include information on the amount of padding to include in the frames exchanged between the APs and STAs, or in the frames exchanged between the APs. The padding can provide receiving devices additional processing time before they respond. AP capabilities data 555 can include information on common basic service set (BSS) color or association identifiers (AID) indicative of participating stations 240. The AID can include a unique identifier used in wireless networks to identify and manage devices accessing the network within the same network infrastructure.

The capabilities, including AP capabilities 555 or station capabilities data 550 can include information on number of antennas, bandwidth and sounding capabilities, availability of one or more stations 240 to participate in the TXOP (e.g., based on prior power-save indications from stations 240), or information on durations of data transmissions of one or more STAs 240 (e.g., based on amount of queued or pending data traffic for stations 240, or average duration measured from prior data transmissions for stations 240). The capabilities can include nulling capabilities or maximum client limits of APs 205. The APs 205 can be configured to perform a handshake and exchange various information (e.g., via ICF and CBF response) including information about modulation and coding scheme (MCS) and its related error vector magnitude (EVM). The MCS can include or identify one or more parameters indicative of a data rate or error correction level in a wireless communication, which can be used, for example, to balance the speed of communications with reliability of the transmissions. The MCS can define or set the combination of modulation type and error-correction coding rate. For instance, a value parameter that is above a threshold for MCS can use a 64 Quadrature Amplitude Modulation (64-QAM) with a lower coding rate for faster data transmissions (e.g., transmissions greater than a transmission rate threshold), while a value parameter for MCS below the threshold can use BPSK with a higher coding rate for more reliable communications in poor signal conditions, but at lower transmission rate (e.g., transmissions lower than the transmission rate threshold).

The capabilities, including AP capabilities 555 or station capabilities 550, can include information on parameters such as AID of each candidate STA, the physical-layer capabilities (e.g., station capability data) of each candidate station, such as operating bandwidth, maximum number of receive spatial streams (e.g., Receive Nss), sounding-feedback capability, as well as the MAC capabilities and any padding preferences. The capabilities can further include a list of stations of a particular AP, per-STA number of spatial streams (e.g., the Nss) for the AP, STA or for the group of STAs, and any resource unit (RU) allocation for the AP, STA or the group of STAs.

Still referring to FIG. 5, the first AP 205 can utilize the station selector 510 to choose one or more potential stations 240 within its own BSS 250 to participate in CBF. To make such selections, the station selector 510 can use, for example, station capabilities data 550 of the stations 240 and its own AP capabilities data 555, such as channel and traffic characteristics or prior station availability information to select STAs 240 to participate in the CBF operations. The station capabilities data 550 can include or indicate capabilities, settings or parameters of the individual stations 240 relevant to the ability and functionality of the stations 230 with respect to CBF. AP capabilities 555 can include features or attributes defining performance or functionality of APs 205 for implementing wireless communications. AP capabilities data 555 can include, for example, information on the amount of padding to include in the frames exchanged between the APs and STAs, or in the frames exchanged between the APs. The padding can provide receiving devices additional processing time before they respond. AP capabilities data 555 can include, for instance, signals or data indicative of the amount of padding a receiving device requests or a sending device provides. The first AP 205 can utilize a communication controller 215 to exchange with the second AP 205, one or more station capabilities data 550 indicative of capabilities of the candidate STAs 240. The second AP 205 can similarly gather and then share with the first AP 205 the AP capabilities data 555 of the second AP 205 and station capabilities data 550 of the stations 240 of the second BSS 250 of the second AP 205. Based on the gathered and exchanged capabilities of all the candidate stations 240, the first AP 210, the second AP 205 or the first and the second APs 205 together can determine which of the stations 240 are going to participate in the CBF operations. The first AP 205 and the second AP 205 can implement a sequence (e.g., ICF 535) between each other to establish the set of stations 240 for the CBF 505 operations.

During the course of the ICF 535 for CBF establishment, the first AP 205 and the second AP 205 can exchange their AP capabilities data 555, such as their number of antennas 225 or dimensions supported, sounding capabilities and nulling capabilities of the APs 205. The first and the second APs 205 can utilize parameters, such as a designated common basic service set (BSS) color or association identifiers (AID) indicative of participating stations 240. The AID can include a unique identifier used in wireless networks to identify and manage devices accessing the network within the same network infrastructure. The first AP 210 can conduct a handshake with the second AP 205 to exchange candidate station capabilities data 550, such as antenna numbers, bandwidth, sounding and nulling capabilities, or AP capabilities data 555, such as maximum client limits. This first AP 205 can enter a phase of CBF coordination with the second AP 205, determining parameters for CBF operations such as nulling direction, type, or duration, and utilizes information from the second AP's frame preamble to perform CBF 505 operation based on common BSS color or AID.

The APs 205 can include CBF synchronizers 515 to coordinate or synchronize CBF communications using any combination of CBF messages 520. The CBF messages 520 can include any messages for gathering, coordinating or adjusting information utilized for CBF communications, including CBF requests 525, CBF responses 530, ICFs 535, ICRs 540 or CBF triggers 545. For instance, a first AP 205 can include a CBF synchronizer 515 configured to generate, transmit, send, receive or otherwise provide a CBF message 520 (e.g., first message, such as an ICF 535) to a second AP 205 or STAs 240 of the first AP 205, to initiate a TXOP for CBF coordination or synchronization between the two or more APs 205 and two or more STAs 240 of the first and the second AP. The CBF message 520, such as the ICF 535, can be transmitted by the CBF synchronizer 515 or the CBFM 505 as part of the coordination phase to gather information from the STAs 240 within their BSS 255 or exchange information between the APs 205. The CBF message 520 can identify or indicate at least one AP 205 that is capable of performing the CBF operations. In some instances, the identification of the at least one AP 205 can occur prior to receiving ICR 540 from the STAs 240 associated with the CBF PPDU transmission. The second AP 205 that is addressed by the first message (e.g., ICF 535 or CBF request 525) can respond to the first AP 205 by transmitting a CBF response 530. The CBF response 530 can include information on participating STAs 240 of AP2 205 and any parameters of those STAs for CBF coordination (e.g., MCS, Nss, Bandwidth, Puncturing information, nominal padding requirements, amount of pending or en-queued data traffic (e.g., data that has been added to a queue for processing), duration of station availability, transmission power, beamforming weights, timing synchronization, and channel state information). For example, the CBF response 530 can signal the availability and duration of the AP2-STAs, allowing the first AP 205 to update its scheduling and synchronization information accordingly.

By transmitting their initial CBF messages 520 (e.g., ICF 535 or CBF request 525 and CBF response 530), the first AP 205 and the second AP 205 can reach a preliminary or a first scheduling consensus. The preliminary or the first scheduling consensus can include determinations and settings as assumed or established by the first AP and the second AP based on their available information and can correspond to a plurality of entities (e.g., STAs 240, APs 205, antennas 225) that transmit and receive scheduling parameters for the CBF PPDU transmission. The first or the preliminary scheduling consensus can be updated by subsequent ICRs 540 from the STAs 240 of the first AP or the second AP, which can be used to transmit to the APs updated information on the STA's availability or parameters to use for participation in CBF. The first or the preliminary scheduling consensus can be subsequently updated by the first AP based on the CBF response received from the second AP. The first or the preliminary scheduling consensus can allow for each participating entity in the CBF operations synchronize and align regarding the timing of the CBF PPDU transmission to reduce the occurrence of phase misalignments, absent any changes or corrections to the scheduling consensus in subsequent ICRs 540 (e.g., from STAs 240).

CBF messages 520 (e.g., ICFs 535 or ICRs 540) can include any information for coordinating CBF communication, including information on timing, availability and parameters for any participants, such as timing of data transmission of each participant within the TXOP for each AP or STA. CBF message 520 can include information on a direction in which the interference from the second AP 205 is to be completely or partially nulled. For example, CBF message 520 can include a plurality of directions for the second AP 205 to partially null for completely null interference. The first AP 205 and the second AP 205 can select a subset of the set of directions to partially null or completely null the interference form the second AP 205 while transmitting the CBF PPDU. The CBF message 520 can include a list of identifiers for the first candidate set of stations, information on a proposed start time or duration of the CBF transmission, and a proposed number of spatial streams (e.g., for one or more STAs 240 of the first AP or the second AP). The proposed start time or duration can correspond to the schedule consensus for the first AP and the second AP.

The set of directions to partially or fully null interference can correspond to a configuration of beamforming weights or spatial directions that increase a likelihood that the antennas 225, the APs 205, or the STAs 240 do not interfere with transmitted signals. To achieve this, the set of direction can utilize linear algebra (e.g., vectors, matrices) to find beamforming weights that are orthogonal to the interference channels. By the APs 205 communicating parameters prior to the CBF PPDU transmission, the APs 205 can effectively improve on the synchronization of the CBF PPDU transmission.

The first AP 205 can transmit, to at least the first STA 240 in a set of one or more candidate STAs 240, a CBF message 520. The CBF message can include, for example, an ICF 535. The first AP 205 can use the station selector 510 to select, identify, or otherwise indicate the first STA 240 from the set of candidate STAs 240 based on the first AP 205 receiving, retrieving or otherwise obtaining information on availability to participate in the TXOP or information on durations of data transmissions of the first candidate set of STAs 240. For example, the first AP 205 can retrieve the availability of a first STA 240 to participate in the TXOP or an average duration of data transmissions of the first STA 240. For example, the information on availability or average duration of the first STA 240 can be retrieved from AP capabilities data 555 corresponding to the first AP 205 or station capabilities data 550 corresponding to the first STA 240. Once retrieved for the first STA 240, the CBFM 505 can compare the availability or the average duration against one or more thresholds. The one or more thresholds can indicate the minimum availability or the minimum duration of a respective STA 240 to participate in the TXOP. In response to the availability or average duration of data transmission of the first STA 240 satisfying the one or more thresholds, the first AP 205 can determine, identify, or otherwise indicate the first STA 240 to participate in the CBF TXOP. The first AP can iteratively repeat this process for each first STA 240 within range of the first AP 205. Upon completion of the iteration, the first AP 205 can determine, identify, or otherwise indicate a first set of STAs 240 of the first AP 205 to participate in CBF during the TXOP based on the information on availability and durations of the data transmissions. Each STA 240 in the first set of STAs 240 can include an availability and a duration of data transmissions that satisfies the threshold. Reception of the CBF message 520 by the second AP 205 or the first STA 240, can initiate the CBF TXOP. The CBF TXOP can allow the first AP 205 to use the CBFM 505 to generate and transmit the CBF messages 520 without interference or interruption by other APs 205 or STAs 240.

By transmitting the CBF message 520 (e.g., ICF 535) to the second AP 205, the APs 205 can communicate beamforming information and parameters of the first AP 205 and its STAs 240 to synchronize the information with the second AP 205 according to, or using, the CBF synchronizer 515. For example, the CBF synchronizer 515 can perform a function of the ICF 535 for the first STA 240 within the candidate set of STAs 240 and the second AP 205. The function of the ICF 535 can be for the CBF message 520 addressed to the second AP 205 and the first STA 240. The function of the ICF 535 can include EMLSR, IDC, power save, among other functions for the ICF 535. The function of the ICF 535 can cause the second AP 205 to respond with beamforming information, parameters, or station capabilities data of the second AP 205 to the first AP 205. Concurrently, the CBF synchronizer 515 can embed the CBF request 525 within the CBF message 520.

The second AP 205 can receive, retrieve, or otherwise obtain, from the first AP 205, the CBF message 520 (e.g., ICF 535 from the first AP) via the communication controller 215. The CBF message 520 (e.g., the ICF 535) can include an indication for the second AP 205 to solicit information on the second candidate set of stations. The indication can cause, trigger, or enable to the second AP 205 to retrieve information on availability and duration of data transmissions for the second STAs 240. The solicited information can allow the CBFM 505 of the second AP 205 to select, from the second candidate set of stations 240, a second set of stations to participate in CBF during the TXOP. The second set of STAs 240 can be different from the first set of STAs 240. The second AP can use the information (e.g., availability and duration) to select each STA 240 in the set of STAs 240. The CBF message 520 (e.g., the ICF 535) can include information, parameter, data, or signals to initiate the CBF TXOP, such as power demands, station capabilities data 550, AP capabilities data 555, resources available, among other parameters to initiate the CBF TXOP.

The second AP 205 can extract the parameters from the CBF message 520 (e.g., the ICF 535) and generate a CBF response 530 to provide parameters of the second AP 205 such as, station capabilities data 550 of the STAs 240 of the second AP, AP capabilities data 555 of the second AP 205, including any information on resources available, among others within an ICR 540 received by the second AP 205 from the STAs 240 of the second AP 205. Using the parameters of the first AP 205 and the parameters of the second AP 205, the APs 205 (e.g., the first AP) can generate (e.g., via its CBF synchronizer 515) a schedule for the CBF PPDU transmission. This schedule can be a preliminary schedule generated based on stale data or data available to the APs 205, prior to any data updates from the STAs 240, or prior to a CBF response 530 from the second AP 205. This schedule can be a schedule that is finalized per feedback of data from ICRs 540 from the STAs, updating the information on the APs 205. The schedule can be finalized or adjusted per feedback of data from the CBF response 530 of the second AP 205. For instance, the second AP 205 can embed within the CBF response, one or more of: a confirmation of the proposed start time or duration of the CBF transmission, a list of identifiers for the second set of stations to participate in CBF, or a number of spatial streams (Nss) intended for one or more stations of the second set of stations in the CBF transmission, for the first AP to determine a schedule for the CBF transmission. The schedule can indicate a desired, selected or optimal time (e.g., proposed start time) for the CBF PPDU transmission to synchronize the APs 205 while minimizing interference by the APs 205.

The APs 205 can generate the schedule according to a plurality of factors including the ICRs 540 and the CBF response 530. The factors can further include the selected STAs 240 for the selected CBF transmission, the MCS assigned to each STA, the Nss assigned to each STA, the duration of the CBF PPDU transmission, the duration of availability of each STA, amount of queued or pending downlink data traffic for each STA, the parameters of the CBF PPDU, the contents of the PHY preamble, among others. The CBFM 505 of each AP 205 can leverage, rank, or otherwise utilize each of the factors during the generation or adjustment of the schedule (e.g., preliminary or finalized) according at least one respective endpoint for the CBF PPDU transmission. The endpoint can include the shortest data transmission, specific MCS and Nss assigned to each STA 240, STAs 240 within a specific range of each AP 205, among others.

For example, the APs 205 can generate a schedule achieve the shortest data transmission for the CBF PPDU transmission. To generate the schedule for the shortest data transmission, the CBFM 505 of the APs 205 can be configured to select the set of STAs 240 based on the information of the durations of data transmission as a priority. The APs 205 can utilize other factors ( e.g., MCS assigned to each STA 240, Nss assigned to each STA 240, availability to participate in the TXOP, duration of availability, etc.) to adjust the generated schedule for the CBF PPDU. In another example, the APs 205 can prioritize the MCS assigned to each STA for the generation of the schedule, while leveraging the other factors to adjust the preliminary schedule. Utilizing the various factors, the systems and methods described herein can overcome the challenges of synchronization and timing by following the generated schedule as described above.

The first AP 205 can establish, set up, modify or configure one or more settings of the first AP 205. The one or more settings can be settings to establish or coordinate with the second AP 205 a time and a frequency of a transmission to the first station 240. The transmission can be a message, a request, a response to a request or a network data packet, such as a packet of a spatial data stream 230. The time can be a time at which the first AP 205 is to transmit the transmission to the first station 240. The time can be synchronized to be the same time as a transmission from the second AP 205 to a second station 240. The time can be synchronized to be different than the time at which the second AP 205 transmits the second transmission to the second station 240. The one or more settings can be for the first AP 205 to send or transmit the transmission to the second station 240 according to the second direction to null the interference partially or fully at the second station 240. The one or more settings can configure the first AP 205 and the second AP 205 according to the schedule for the CBF PPDU transmission.

The first STA 240 can receive, retrieve, or otherwise obtain, from the first AP 205, the CBF message 520 (e.g., the ICF 535) via the communication controller 215. The first STA 240 can receive the CBF message 520 (e.g., the ICF 535) from the first AP 205 over the links 560. The first STA 240 can provide, responsive to the first CBF message 520 from the first AP 205, station capabilities data 550 of the STA 240 to the first AP 205, via the ICR 540 in response to the reception of the CBF message 520. The station capabilities data 550 of the first STA 240 can include an indication of the station's availability and duration of availability of the station . The first STA 240 can formulate the station capabilities data 550 with the ICR 540 and transit the ICR 540 to the first AP 205 as a response to the CBF message that includes the ICF 535. The first AP 205 can receive one or more indications from the first STAs 240, responsive to the first message. The one or more indication can correspond to one or more durations of data transmissions of each of the one or more first STAs 240. The one or more indications can correspond to an availability of the first STAs 240 of the candidate set of STAs 240 to participate in the TXOP. The one or more indications can be a flag, an indication, a field in the preamble of a data packet, among other indications. The one or more indication can be received via at least one of a trigger-based physical protocol data unit (TB-PPDU) format or a non-high-throughput duplicate transmission (non-HT DUP) format. For example, a first subset of first STAs 240 can indicate that there is no availability to participate in the TXOP whereas a second subset of first STAs 240 can indicate that there is availability to participate in the TXOP. In another example, a subset of first STAs 240 can provide durations of data transmissions to the first AP 205. Using the durations of data transmissions for each of the subset of first STAs 240, the first AP 205 can determine the availability of the each of the subset of first STAs 240.

Upon reception of the one or more indications, the first AP 205 can adjust, modify, or otherwise generate the first message to indicate the availability of the subset of first STAs 240 to participate in the TXOP. The first message can be adjusted using adjustment information within ICRs 540 of each first STA 240. The adjustment information can include changes to what was signaled in the CBF -req, aborting the CBF for the TXOP, reduction in payload duration, or first STAs 240 dropped from the CBF-req. In some implementations, the first AP 205 can transmit, send, or otherwise provide an adjusted first message (e.g., CBF-adj) to the second AP 205 according to an adjusted CBF request. The adjusted CBF request can indicate the respective adjustment information contained within the adjusted first message. For example, the adjusted CBF request can signal that the adjusted first message includes "No changes to what was signaled in CBF-req." In another example, the adjusted CBF request can signal that the adjusted first message includes "Aborting/terminating CBF for this TXOP." Based on the adjustment information, the first AP can determine whether to initiate the TXOP or abort/terminate the TXOP. Once transmitted to the second AP, the adjusted first message can initiate the TXOP according to the adjusted CBF request.

Continuing on, the second AP 205 can receive the CBF-adj from the first AP. The CBF-adj can indicate whether the first AP 205 is terminating or initiating the TXOP. If the first AP 205 is terminating the TXOP, the second AP 205 can terminate the generation of an adjusted CBF response, or terminate preparation for the TXOP, to save computing resources. For example, in terminating preparation for the TXOP e, the second AP 205 is not required to identify or select beamforming vectors for the second STAs 240 to null interference partially or fully at the first STAs 240. The first AP 205 can terminate the TXOP based on a lack of availability of the first STAs 240 to participate in the TXOP, improper MCS assigned to the first STAs 240, reduced MCS or data-rates for first STAs 240 resulting from nulling interference partially or fully at second STAs 240 identified by the second AP for the TXOP (e.g., in a CBF response), improper PPDU format, among other factors to terminate the TXOP. For example, in response to the first AP not terminating the TXOP as indicated within the CBF adj, the second AP 205 can generate, create, or otherwise determine an adjusted second message (e.g., adjusted CBF response) to the adjusted first message (e.g., CBF adj or adjusted CBF-req). The adjusted second message can include adjustments to information on a second set of STAs 240 previously indicated by the second AP 205 (e.g., in a second message, such as a CBF-response or CBF-resp). For example, the adjustments to information on the second set of STAs 240 can be responsive to ICRs 540 transmitted by one or more STAs of the second set of STAs 240 (e.g., indicating their availability or duration of availability for the TXOP), in response to an ICF 535 from the second AP. For example, the adjusted CBF response can signal "No changes to what was signaled in CBF-resp". In another example, the adjusted CBF response can signal "Aborting/terminating CBF for this TXOP" on behalf of the second AP.

The second AP 205 can use the station selector 510 to select, identify, or otherwise indicate a second STA 240 (e.g., to participate in CBF TXOP) out of a pool of second set of candidate STAs 240. The second set of candidate STAs 240 selected for CBF TXOP can include any number of STAs 240 of the second AP 205 and can have the same or different number of STAs as the first set of candidate STAs 240 selected by the first AP 205. The station selector 510 can use presence of data traffic (such as pending or queued downlink (DL) data traffic for STAs), suitability of the CBF among other factors to identify the STAs 240 to participate in the CBF TXOP. The second STA 240 can be connected with the second AP 205 via the links 560. The second STA 240 can be located with the second BSS 250 and in the second range 255B of the second AP 205. Once the second STA 240 is connected, the second AP 205 can generate the ICF 535 for the second STA 240 and generate the CBF response 530 for the first AP 205. For example, the second AP 205 can select second STA 240 based on the reduced amount of data traffic within the channels. Reduced data traffic can indicate a lower amount of interference for the CBF PPDU.

The first station 240 can be configured to receive wireless transmissions from the first AP via the wireless local area network (WLAN) of the first AP. The second station 240 can be configured to receive wireless transmissions from the second AP via the WLAN of the second AP. The first station 240 and the second station 240 can each be located within a first range 255 of the wireless transmissions from the first AP 205 and a second range 255 of the wireless transmissions from the second AP 205.

The second AP 205 can transmit the ICF 535 to the second STA 240. The ICF 535 of the second AP 205 can be transmitted responsive to the ICF 535 of the first AP 205 transmitted to the second AP 205. The ICF 535 can be an ordered or organized one or more (e.g., a series of) frames that are exchanged between the second AP 205 and the second STA 240 and. Using the one or more frames of the ICF 535, the second STA 240 can be configured to set, establish or otherwise manage communication parameters to allow for synchronization, allocate resources, and reduce interference between the first AP 205 and the second AP 205. The ICF 535 can include various frame sequences such as RTS/CTS, trigger frames, beacon and probe frames, CSI feedback, Nulling frames, Coordination frames, CBF PPDU among other frames. Upon reception of the ICF 535, the second STA 240 can generate the ICR 540 for transmission to the second AP 205 to acknowledge the reception of the ICF 535.

The second AP 205 can transmit a CBF message 520 (such as a CBF response) to the first AP 205 during the coordination phase of the first and second APs 205. The message 520 can identify the second station 240 of the second AP 205 for which interference from the first AP 205 is to be partially nulled or fully nulled. The message 520 can include or identify a second direction in which the interference from the first AP is partially nulled or fully nulled at the second station 510. The direction or set of directions can be a linearly independent vector or direction along which transmissions from the first AP 205 can be reduced below a predetermined threshold (e.g., a threshold corresponding to a power or gain level of the signal or defined in accordance with a noise signal level). The message 520 can include location information (e.g., location of the STA with respect to the AP 205, coordinates of the STA 240 with respect to AP 205, information on the or any other information corresponding to spatial orientation of the STA). The message 520 can be embedded or encrypted with the CBF response 530 for transmission to the first AP 205. The second AP 205 can transmit the CBF response 530 to the first AP 205, to acknowledge reception of the CBF request 525 and indicate the second STA 240 that is participating in the CBF TXOP.

In some instances, the first AP 205 can be configured to determine, identify, or otherwise calculate, based at least on the second set of one or more directions, a spatial orientation of one or more antennas 225 of the first AP 205. The spatial orientation of the one or more antennas 225 of the first AP 205 can be a physical spatial orientation of antennas or a vector (e.g., beamforming vectors) of varying beamforming weights (e.g., magnitude and phase) to vary with any changes in frequency. The beamforming vectors or the spatial orientation of the one or more antennas 225 of the first AP 205 can be determined based at least on one or more of: the downlink channel state information (CSI) at the first STA 240 as measured from the first AP 205 or the second AP 205, the downlink channel state information (CSI) at the second STA 240 as measured from the first AP 205 or the second AP 205, the locations (e.g., coordinates or GPS locations) of the first station 240, the second station 240 and/or the first AP 205.The first AP 205 can be configured to beamform the transmission with respect to the first station 240 based at least on the spatial orientation of the one or more antennas 225 of the first AP 205.

In some instances, the first AP 205 can be configured to receive, retrieve, or otherwise obtain a packet comprising information on the first STA 240. The packet can include a network packet, a message or a transmission that can include information on the characteristics of the channels of the first station 240 and/or the second station 240. The first AP 205 can be configured to identify, from the received packet information indicative of a spatial orientation of the first client with respect to the second AP. For example, the first AP 205 can determine linearly independent vectors at the STA 240 at which interferences at the STA 240 are partially or fully nulled. The first AP 205 can be configured to determine a first set of one or more directions for the one or more antennas of the first AP 205 using the spatial orientation.

The packet information of the first STA 240 can trigger, cause, or otherwise initiate the first AP 205 embed timing, frequency, and control information (e.g., direction of the antennas, MCS assigned to each STA, Nss assigned to each STA 240, contents of the preamble, etc.) of the first AP 205 into one or more fields of a third message (e.g., CBF trigger 545). The third message or CBF trigger can be the final frame in the frame sequence immediately preceding the CBF PPDU. For example, the first AP 205 can embed the timing and control information of the first AP 205 within the third message (e.g., CBF trigger 545) transmitted to the second AP 205, which can indicate to the second AP 205 the start of the CBF PPDU at a specified time interval from the end of the third message. Based on the timing and control information embedded within the third message, the second AP 205 can begin a counter at the end of third message that increases to the specified time interval for the start of the CBF PPDU. As the counter increments, the second AP 205 can adjust the one or more antennas to align with the first AP 205 to allow for synchronization. When the counter reaches the specified time interval, the second AP 205 can commence its transmission of the CBF PPDU, thereby synchronizing or aligning its start time with the transmission of the CBF PPDU from the first AP 205. In another instance, the first AP 205 can embed the MCS assigned to each first STA 240 of the first AP 205 within the third message prior to transmission to the second AP 205. Based on the embedded MCS for the first STAs 240 in the third message, the first and second APs 205 can synchronize and broadcast identical values of MCS for each first STA 240 in the CBF preamble, which can allow the first STAs 240 to correctly decode their MCS and process the CBF PPDU. The packets can include CSI information to align the beamforming weights of the STAs 240 and the APs 205 and feedback packets from the APs 205 and the STAs 240 to adjust the timing and synchronize transmitters to improve signal reception.

The first AP 205 can be configured to transmit, send, or otherwise provide the third message (e.g., the CBF trigger 545) to the second AP 205. Prior to the transmission of the third message, the first AP 205 can utilize the information from the first STA 240, the second STA 240, and the second AP 205, as specified within the ICR 540 and the CBF response 530 to update the scheduling and timing of transmissions for each of the participants (e.g., APs and STAs) within the TXOP. The ICR 540 can indicate an availability of STAs 240 or the second AP 205 for the CBF TXOP . The ICR 540 can further indicate how long the STAs 240 are available to participate in the CBF TXOP. The CBF response 530 can indicate whether the second AP 205 can participate in the CBF TXOP, the set of second STAs 240 that are available to participate in the CBF TXOP, the number of spatial streams for each STA in the second set of STAs 240, or an amount of downlink traffic that is available at the second AP 205 for the set of second STAs 240. For example, the first AP 205 can receive the ICR 540 and the CBF response 530 from the STAs 240 and the APs 205. Upon reception, the first AP 205 can generate the third message (e.g., CBF trigger) for the second AP 205 based on the CBF response 530 and the ICR 540. The first AP 205 can use or derive timing adjustments, confirmation of frequency synchronization, phase alignment (e.g., signal-to-noise ratio, pilot measurements), resource allocation, and timing/frequency instructions from the ICR 540. In addition, the first AP 205 can use or derive timing alignment information (e.g., avoid inter-symbol interference), CSI, pilot signals, CSI feedback (e.g., phase information), beamforming weights, beamforming strategies, MCS for first STAs 240, and spatial alignment from the CBF response 530. Based on the information from the CBF response 530 and the ICR 540, the first AP 205 can embed the information within the third message (e.g., CBF trigger 545). In further detail, the first AP 205 can determine, execute, or otherwise perform a plurality of actions and embed within the CBF trigger 545. The plurality of actions can include aborting the CBF TXOP, perform the CBF TXOP with a different or reduced set of STAs 240, adjust the duration of the CBF TXOP, and update the MCS for the STAs 240 based on the ICR 540 and the CBF response 530. For instance, the first AP 205 can abort the CBF TXOP based on an insufficient length of time indicated within the ICR 540 based on the timing alignment information from the second AP 205. In another instance, the first AP 205 can use or derive the timing alignment information, phase alignment information, the set of participating second STAs 240 and their Nss, or the beamforming weights from the ICR 540 and the CBF response 530 to determine the MCS for one or more participating first STAs 240, for embedding in the CBF trigger. In another instance, the first AP 205 can use or derive the timing alignment information, phase alignment information, the set of participating second STAs 240 and their Nss, the amount of downlink traffic available for second STAs 240, duration of availability of STAs 240, or the beamforming weights from the ICR 540 and the CBF response 530 to adjust the duration of the CBF TXOP from what was originally specified in the CBF request 525.

In some examples, the CBF trigger 545 within the third message can be broadcast to the APs 205. The CBF trigger 545 can be a signal or a broadcast to initiate, manage, or otherwise establish a CBF transmission (e.g., CBF PPDU) for set up of the APs 205 prior to the CBF transmission. The CBF trigger 545 can include instructions for the APs 205 to participate in the CBF TXOP. The CBF trigger 545 can indicate a plurality of resources (e.g., time slots, frequency subcarriers, spatial streams), for each AP 205 involved in the CBF TXOP, timing information, feedback instructions, beamforming instructions, among others. In some instances, the CBF trigger 545 can include CSI requests to establish the beamforming weights for the CBF PPDU. In some instances, the CBF trigger 545 can include timing and control signals to align transmission timings or beamforming directions of each antenna of the APs 205 for the CBF PPDU. In some instances, the CBF trigger 545 can include an abort signal generated by the first AP 205 to cancel or abort the CBF TXOP. The abort signal can prevent resource wastage and reduced performance of the system 500 based on a plurality of factors detected by the first AP 205. The factors can include CSI issues (e.g., incorrect CSI, incomplete CSI feedback), AP 205 or STA 240 malfunctions (e.g., misaligned timing, non-responsive APs 205 or STAs 240), interference detection (e.g., external interference, self-interference), network resource allocation (e.g., priority traffic, congestion), non-availability of STAs 240 of the first AP 205 (e.g., as indicated by means of the ICR from the first AP's STAs 240), availability for limited duration of the second AP 205 or the STAs 240 of the second AP 205 (e.g., as indicated by means of the CBF response), selection of the participating STAs 240 of the second AP 205 and their associated Nss which requires the first AP to utilize beamforming vectors that result in poor or low MCS or data-rate for the first AP's STAs 240 (i.e., where the first AP 205 has to sacrifice too much of its own STAs' data rates in order to accommodate the second AP's STAs 240), among other factors that impact the CBF TXOP. For example, the first AP 205 can generate the abort signal in response to the CBF response 530 from the second AP indicating insufficient power resources for the CBF PPDU. In another example, the first AP 205 can generate the abort signal in response to the first AP 205 detecting a malfunction at the APs 205 and the STAs 240.

The second AP 205 can be configured to receive, retrieve, or otherwise obtain the third message from the first AP 205. Upon reception of the third message, the second AP 205 can extract the CBF trigger 545 from the third message to obtain the information and parameters associated with the first AP 205. Using the information, the second AP 205 can adjust the timing, frequency, and the control signals to synchronize with the first AP 205. For example, the second AP 205 can adjust the timing of the CDF PPDU based on the schedule consensus and resources (e.g., station data capabilities 550) available to the STAs 240. In another example, the second AP 205 can adjust the frequency of the CBF PPDU based on the AP capabilities data 555 and the station capabilities data 550. The CBF trigger 545 can further contain information on the preamble of the CBF PPDU. The second AP can include information from the CBF trigger 545 in the preamble of the CBF PPDU to ensure that both APs transmit identical preambles for the CBF PPDU, thereby enabling STAs of both APs to decode the preamble correctly without error.

Coordinated beamforming managers 525 or the CBF synchronizers 515 of the APs 205 can be configured to implement and manage CBF communications, including transmit or receive various CBF transmissions. For example, following a coordination or synchronization of the CBF TXOP, the APs 205 as well as STAs 240 can be engaged in CBF TXOP communications. These CBF transmissions can be implemented to include acknowledgements (e.g., ACKs). For instance, following transmission of a CBF PPDU, one or more acknowledgements (e.g., ACKs) from AP1-STAs and AP2-STAs that are addressed by the transmitted CBF PPDU can be collected or solicited via one of the following methods. In one example, the ACKs can be included in a single TB-PPDU transmitted simultaneously by both AP1-STAs and AP2-STAs, following the CBF PPDU. The TB PPDU can be solicited by individual trigger frames or fields for each STA contained in the CBF PPDU/transmission (e.g., within an A-MPDU addressed to a STA). The trigger contents for AP1-STAs can be transmitted by AP1, and those for AP2-STAs can be transmitted by AP2. Each STA can occupy a different RU and/or spatial stream in the TB-PPDU, as specified by its received trigger contents. The APs can signal to each other or negotiate beforehand the RUs or spatial streams allocated to each of the STAs from which an ACK is solicited.

For example, one or more ACKs can be solicited sequentially in two TB PPDUs, one for AP1-STAs and another for AP2-STAs, following the CBF PPDU. In one example, the ACKs from AP1-STAs can be solicited in TB-PPDU-1 which immediately follows the CBF transmission, wherein the individual trigger frames or fields soliciting the ACKs are contained within A-MPDUs addressed to each AP1-STA in the CBF PPDU. The ACKs from AP2-STAs can be solicited by a separate Multi-user Block-ack-request (MU-BAR) frame transmitted by AP2 after TB-PPDU-1, and AP2-STAs addressed by the MU-BAR respond by transmitting TB-PPDU-2 containing their ACKs. In another variant, following the CBF PPDU, AP1 transmits a first MU-BAR soliciting ACKs from AP1-STAs, to which AP1-STAs respond by transmitting TB-PPDU-1. Following TB-PPDU-1, AP2 transmits a second MU-BAR soliciting ACKs from AP2-STAs, to which AP2-STAs respond by transmitting TB-PPDU-2. Successive, neighboring, or adjacent frames in the above sequence can be separated by SIFS.

In various implementations, the CBF requests 525 or CBF responses 530 can be encapsulated as part of ICF from either AP1 or AP2, with the content of CBF-req or CBF-resp signaled within User-Info fields addressed with a specific pre-negotiated or pre-defined AID value. These User-Info fields may be processed by the APs and ignored by AP1-STAs and AP2-STAs. These fields can be signaled at the beginning of the ICF frame (e.g., such as following a Common-Info and Special User-Info fields). A CBF adjustment message (e.g., CBF-adj) can be included or encapsulated as part of an ICR message or a standalone frame. The format of the ICR message or standalone frame can be multi-STA Block-ACK (M-STA-BA). For any CBF-TXOP frame sequences, participating AP1-STAs and AP2-STAs that are notified by an ICF from their respective APs can be requested to remain in receive-mode, wherein they are capable of receiving a CBF PPDU. Such a device can be allowed to exit the receive-mode and transition to listen-mode (i.e., with limited capability that may not permit receiving a CBF PPDU) after a pre-determined or pre-negotiated duration from the reception of the ICF, if it hasn't received a CBF PPDU or an indication of an impending PPDU (within the same TXOP) intended for the device in this period. The disclosed CBF-TXOP frame sequences herein can also be applied to other forms of multi-AP coordination that utilize concurrent transmissions across two or more BSS, such as coordinated-spatial-reuse (CSR) and coordinated-orthogonal-frequency-division-multiple-access (C-OFDMA).

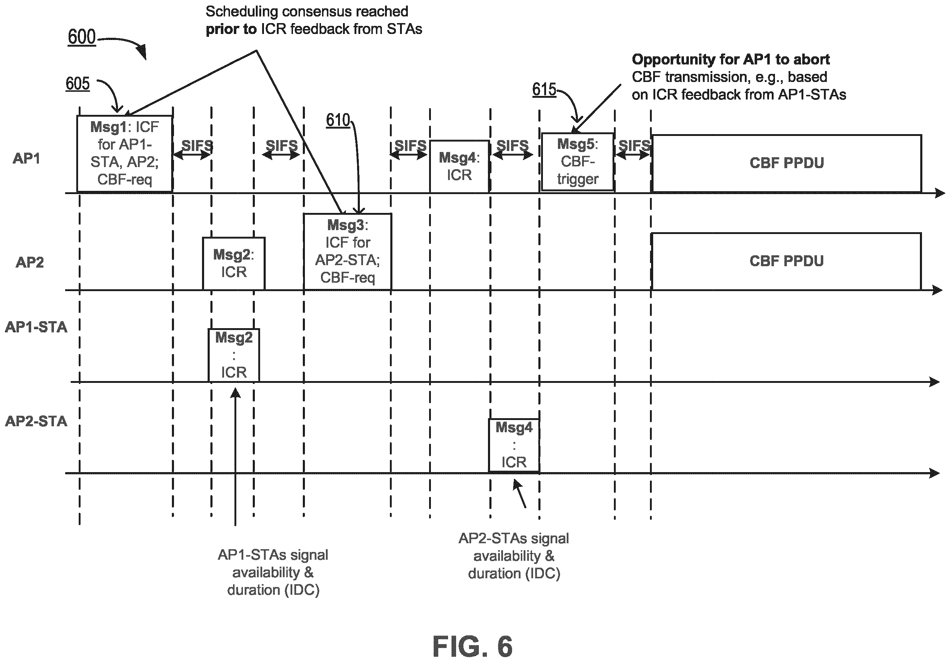

Referring now to FIG. 6 an example method 600 of providing a multi-AP coordination of CBF is illustrated. Method 600 can be implemented, for example, using one or more processors of a computing system configured via instructions and data stored in memory, to implement a configuration or synchronization of CBF operation among the participating devices (e.g., access points (APs) and stations (STAs 240)). The method 600 can be implemented, using for example, system 200, system 500, or any of the features discussed in connection with FIGS. 1A-5. Method 600 can include acts 605-615. At 605, the method can include transmitting, by a first access point (AP) to a second AP that is capable of participating in coordinated beamforming (CBF) and a first candidate set of stations of the first AP, a first message to initiate transmission opportunity (TXOP) with an embedded CBF request. At 610, the method can include transmitting, by the second AP, a second message to the first AP and a second candidate set of stations of the second AP identified to participate in the TXOP with an embedded CBF response responsive to the CBF request. At step 615, the method can include transmitting, by the first AP, responsive to receiving the CBF response that second AP is to participate in CBF, to the second AP a third message having a CBF trigger comprising information to synchronize a CBF transmission to be communicated during the TXOP.

At 605, the method can include transmitting, by a first access point (AP) to a second AP that is capable of participating in coordinated beamforming (CBF) and a first candidate set of stations of the first AP, a first message to initiate transmission opportunity (TXOP) with an embedded CBF request. The first message, also referred to as Msg1, can include an initial control frame (ICF) generated by the first AP. The first AP can initiate the CBF TXOP and a process of synchronization of the CBF TXOP using the Msg1 (e.g., first message) addressed to a first STA of the first APs STAs and to the second AP. During initiation, the first AP can perform the function of ICF (e.g., MU-RTS/BSRP) for first STAs, such as for EMLSR, in-device coexistence (IDC), power-save, among other functions. The first AP can transmit additional signals to first STAs and second AP that can participate in in the CBF transmissions during this TXOP.

The first AP can include or embed "CBF-req" (e.g., CBF request) for second AP to signal info on participating first STAs, and solicit information on participating second STAs of the second APs STAs. In some instances, padding may be included (e.g., as pre-negotiated by first STAs and/or second AP with first AP) to provide first STAs and second AP additional time to process the received frame and prepare for any response. The first STAs and the second AP can transmit Msg2 (e.g., ICR) in response to Msg1. The ICR can be in TB-PPDU format (e.g., if the first AP needs to individually identify each device transmitting the ICR ), or in a non-HT DUP format.

The first STAs addressed by Msg1 can transmit ICR (e.g., CTS/BSR) in response to ICF from the first AP, indicating their availability or duration of availability (e.g., for IDC) for the CBF TXOP. Transmission of the response by second AP could depend on: i) whether second AP supports such a capability (as negotiated beforehand between the APs), or ii) whether the first AP solicits a response from second AP (e.g., in Msg1). If the second AP is capable and the response is solicited, second AP can respond to first AP with ICR (e.g., as acknowledgement for Msg1, or to reserve medium, etc.). The transmission parameters for the second AP's response (e.g., MCS, Nss, RU-allocation) can be specified beforehand (e.g., as part of the ICF or Msg1, or via prior negotiation between first AP and second AP).

If the second AP is capable of responding with Msg2 (e.g., an initial control response or ICR of the second AP) and such a response is solicited by first AP, but second AP does not respond, the second AP can (e.g., in doing so) implicitly notify first AP of second AP's non-participation in CBF for this TXOP. For instance, in response to the first AP not receiving from the second AP an ICR responsive to the ICF of the first message within a predetermined time interval from sending the first message, the first AP can determine that the second AP is not participating in the CBF TXOP. Padding can be included with Msg2, which can provide: (i) first AP additional time to process the received frame (e.g., first AP could specify a longer duration or length for Msg2 or ICR within the Msg1 or ICF), or (ii) second AP additional time to prepare Msg3 (e.g., the CBF response of the second AP to Msg1 of the first AP). For instance, the second AP may request that a longer duration or length be specified in Msg1 for Msg2, via prior negotiation with first AP.

At 610, the method can include transmitting, by the second AP, a second message or Msg3. The second message can include an ICF (e.g., ICF of the second AP, for the second AP STAs) addressed to a second candidate set of stations of the second AP which the second AP can request or invite to participate in the CBF TXOP. The second message can include an embedded CBF response addressed to the first AP, responsive to the CBF request (e.g., from the first AP). The second AP can transmit Msg3 (e.g., ICF) addressed to any candidate second STA in the set of candidate STAs the second AP identifies to participate in this TXOP (e.g., based on the presence of traffic, suitability for CBF, etc.), and to first AP. If second STAs are addressed by the second AP, Msg3 performs the function of ICF for those STAs. In some examples, the second AP may not have a second set of candidate stations identified to participate in this TXOP (e.g., (i) if the second AP does not have any pending downlink traffic for its stations, or (ii) if downlink CSI corresponding to either AP's STAs is not available at the second AP). In such cases, the second AP may include only the CBF response addressed to the first AP in the second message, and not include any ICF addressed to second AP STAs.

The Msg3 (e.g., the CBF response) can embed for first AP info on participating second STAs. In some instances, Msg3 (e.g., the CBF response) can signal the second AP's non-participation in CBF (e.g., if no participating second STAs are identified). Padding may be included (e.g., as pre-negotiated by second STAs and/or first AP with second AP) to provide any addressed second STAs and first AP additional time to process the received frame and prepare for any response.

The first AP can transmit Msg4 (e.g., initial control response (ICR)) to the second AP. The Msg4 can be generated and transmitted in the TB-PPDU format (e.g., if second AP is to individually identify each device transmitting the ICR), or in non-HT DUP format. If any second AP STAs are addressed by Msg3, the second AP STAs can respond with Msg4 using the ICR, which can indicate their availability or duration of availability (e.g., for IDC) for the CBF TXOP. Transmission of the response by first AP could depend on one or more factors, such as whether the first AP supports such a capability (as negotiated beforehand between the APs), or whether second AP solicits such a response from second AP (e.g., in Msg3). If the first AP is capable and the response is solicited by the second AP, the first AP may respond to second AP with ICR (e.g., as acknowledgement for Msg3, or to reserve medium, etc.).

Transmission parameters needed for first AP's response in Msg4 can include, for example, MCS, Nss, RU-allocation, and other data. These parameters can be specified beforehand (e.g., as part of Msg3), or via prior negotiation between first AP and second AP. Padding within the message (i.e., Msg4) transmission may be included, and can provide the second AP additional time to process the received frame (e.g., second AP could specify a longer duration or length for Msg4 in Msg3), or the first AP additional time to prepare Msg5 (e.g., first AP may request that a longer duration or length be specified in Msg3 for Msg4, via prior negotiation with second AP).

At step 615, the method can include transmitting, by the first AP to the second AP a third message or Msg5. The third message can have a CBF trigger comprising information to synchronize a CBF transmission to be communicated during the TXOP. The third message can be transmitted to the second AP responsive to receiving the CBF response from the second AP indicating that second AP is to participate in CBF. The third message can indicate that the CBF transmission is terminated/aborted.

If the second AP indicates participation in CBF in CBF-resp, the first AP can transmit Msg5 which can include a CBF-trigger message. The CBF trigger message can be sent to the second AP or all participating devices (e.g., STAs and APs). The CBF-trigger can signal preamble contents for CBF transmission and can allow for second AP to synchronize with first AP the CBF transmission. For instance, the CBF trigger can provide the information on timing of the CBF transmission, such as align start-time of CBF PPDU, estimate and compensate for frequency-offset of second AP relative to first AP, timing slots for each of the participating STAs and other information for completion of CBF transmissions. In some instances, the first AP can signal that CBF transmission or CBF TXOP is terminated/aborted (e.g., based on ICR feedback from first STAs that indicates that one or more first STAs are unavailable for a part or all of this TXOP, due to IDC requirements). This can be an implicit notification wherein first AP does not transmit a CBF-trigger (e.g., first AP could transmit some other frame instead of CBF-trigger, or nothing at all). Padding may be included (e.g., as pre-negotiated between first AP and second AP) to provide second AP additional time to process the received frame.

If the first AP transmits Msg5 indicating that CBF transmission is not terminated/aborted, CBF PPDU transmission can be initiated after Msg5. The first AP and the second AP can transmit the CBF PPDU. The first AP and the second AP can signal the same preamble content in the CBF PPDU, to ensure correct decoding at either AP's STAs. If any second STA is unavailable for the entire duration of the CBF TXOP (e.g., as indicated by Msg4), the second AP can: (i) substitute any intended payload for that STA with end-of-frame (EOF) padding, or (ii) choose to not transmit any payload to that STA, or (iii) choose to not transmit the CBF PPDU at all. The preamble of the CBF-PPDU can signal content intended for that STA (e.g., as transmitted by first AP). If any second STA is unavailable beyond an initial duration of the CBF PPDU (e.g., as indicated by Msg4), the second AP can shorten the intended payload for that STA to occupy the initial duration and fill the remaining duration of the CBF PPDU for that STA with EOF padding. Successive transmissions in method 600 may be separated by a duration of short-inter-frame-spacing (i.e., SIFS).

In some aspects, the technical solutions of the present disclosure can include multi-access coordination per CBF TXOP frame with a scheduling consensus initially established and then adjusted based on CBF-adj messages from APs and ICR messages from STAs. For example, the technical solutions can utilize an initial control frame (ICF) sent by a first (e.g., initiating) AP to a second AP and to the stations of the first AP (STAs) to initiate CBF synchronization. The STAs of the first AP can respond with their initial control responses (ICRs) to this ICF, while the second (e.g., the responding) AP can send the CBF response along with the ICF for the STAs of the second AP, allowing for a preliminary consensus to be reached between the first AP and the second AP on schedules and determinations for CBF communications, including information on STAs which these APs expect are going to participate, and all of this can be done prior to the ICRs being received from the STAs.

The STAs of the second AP can then reply with their ICRs to the ICF of the second AP. The first AP and the second AP can each receive and process information from the ICRs from their respective STAs and, based on this information, determine to make their own adjustments, including cancelling participation in CBF or making any other adjustments prior to the CBF trigger being sent. The information from the ICRs of the first and second AP STAs can be used by the first AP to generate updated scheduling and determinations for coordinating or synchronizing CBF transmissions. The first AP can then generate a CBF trigger that can include the updated information, including updated information on participating STAs, their updated parameters, and the scheduled timing for initiating and implementing the CBF PPDU transmission among the devices.

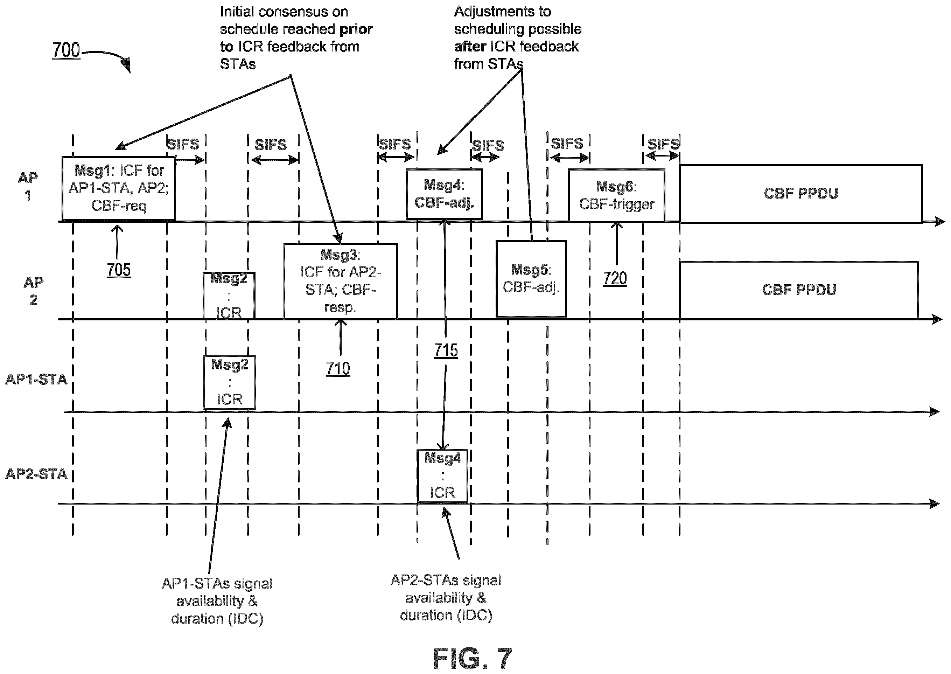

Referring now to FIG. 7 an example method 700 of providing a multi-AP coordination of CBF is illustrated. Method 700 can be implemented, for example, to implement a configuration of CBF operation or a CBF setup. Method 700 can be implemented, using for example, system 200, system 500, or any of the features discussed in connection with FIGS. 1A-5. Method 700 can include acts 705-720. At step 705, the method can include transmitting, to a second AP that is capable of participating in coordinated beamforming (CBF) and a first candidate set of stations of the first AP, a first message to initiate transmission opportunity (TXOP) with an embedded CBF request. At step 710, the method can include receiving, from the first candidate set of stations responsive to the first message, one or more indications corresponding to availability of one or more first stations of the first candidate set of stations for participation in the TXOP. At step 715, the method can include, transmitting to the second AP in response to the one or more indications, an adjusted first message to initiate the TXOP according to an embedded adjusted CBF request. At step 720, the method can include receiving, from the second AP responsive to the first AP not terminating the TXOP via the adjusted first message, a second message comprising an adjusted CBF response to the adjusted first message, the second message comprising information on a second candidate set of stations of the second AP. At step 725, the method can include transmitting, responsive to the second AP indicating participation in the TXOP via the second message, transmits a third message to the second AP having a CBF trigger comprising information to synchronize a CBF transmission to be communicated during the TXOP.

At step 705, the method can include transmitting, to a second AP and a first candidate set of stations of the first AP, a first message or Msg1 to initiate transmission opportunity (TXOP) with an embedded CBF request (CBF-req). The second AP can be an AP that is capable of participating in coordinated beamforming (CBF). The first candidate set of stations (i.e., first STAs) of the first AP can be STAs of the first AP which the first AP can select as potential participants in the CBF TXOP based on prior information or data (e.g., availability of downlink CSI, channel characteristics, presence of downlink queued traffic, or traffic characteristics).

The first AP can initiate the CBF TXOP with Msg1 (e.g., first message or ICF of the first AP) which can be addressed to the first STAs and to second AP. During initiation, the first message of the first AP can include or perform the function of an ICF (e.g., MU-RTS/BSRP) for first STAs. For instance, the first message can correspond to or include information for EMLSR, IDC, power-save, among other functions. The first AP can transmit additional signals to first STAs and second AP that can participate in the CBF transmissions during this TXOP.

The first AP can embed "CBF-req" (e.g., CBF request) in Msg1 for second AP to signal info on participating first STAs and can solicit info on participating second STAs. In some instances, padding may be included (e.g., as pre-negotiated by first STAs and/or second AP with first AP) to provide first STAs and second AP additional time to process the received frame and prepare for any response. The first STAs and the second AP can transmit Msg2 (e.g., ICR) in response to Msg1 (e.g., the ICF). The ICRs can be generated or transmitted in TB-PPDU format (e.g., first AP may individually identify each device transmitting the ICR), or in a non-HT DUP format.

At step 710, the method can include receiving, from the first candidate set of stations responsive to the first message, one or more indications corresponding to availability of one or more first stations of the first candidate set of stations for participation in the TXOP. The first STAs and the second AP addressed by Msg1 can transmit Msg2 comprising an ICR (e.g., CTS/BSR) in response to ICF from the first AP, indicating availability or duration of availability (e.g., for IDC) for the CBF TXOP. In some instances, non-transmission of ICR by one or more first STAs in response to ICF from the first AP can indicate non-availability of the one or more first STAs for the CBF TXOP. Transmission of the response by second AP could depend on one or more factors, such as whether second AP supports such a capability (e.g., as negotiated beforehand between the APs), or whether the first AP solicits a response from the second AP (e.g., in Msg1). If the second AP is capable and the response is solicited, the second AP can respond to first AP with ICR (e.g., as acknowledgement for Msg1, or to reserve medium, etc.). The transmission parameters needed for the second AP's response can include data, such as values for MCS, Nss, RU-allocation and other parameters, which can be specified beforehand (e.g., as part of Msg1, or via prior negotiation between first AP and second AP).

If the second AP is capable of responding with Msg2 and such a response is solicited by first AP, but second AP does not respond, the second AP can implicitly notify first AP of second AP's non-participation in CBF for this TXOP (e.g., by not responding within a predetermined time interval). Padding can be included in Msg2, providing the first AP additional time to process the received frame (e.g., first AP could specify a longer duration or length for Msg2 in Msg1), or the second AP additional time to prepare Msg3 (e.g., second AP may request that a longer duration or length be specified in Msg1 for Msg2, via prior negotiation with first AP).

The second AP can transmit Msg3 addressed to the first AP (e.g., CBF response) and any second STA in the set of candidate STAs the second AP identifies to participate in this TXOP (e.g., based on the presence of traffic, availability of downlink CSI, suitability for CBF). If second STAs are addressed by the second AP, Msg3 performs the function of ICF for those STAs.

The Msg3 can embed a CBF response (CBF-resp) for first AP to signal information on participating second AP STAs. In some instances, the second AP can signal the second AP's non-participation in CBF (e.g., if no participating second STAs are identified in the message) in the CBF response. Padding may be included (e.g., as pre-negotiated by second STAs and/or first AP with second AP) to provide any addressed second STAs and first AP additional time to process the received frame and prepare for any response.

At step 715, the method can include, the first AP transmitting to the second AP, in response to the one or more indications of the first candidate set of STAs or the CBF response from the second AP, an adjusted first message to initiate the TXOP according to an embedded adjusted CBF request. The first AP can transmit Msg4 (e.g., CBF adjust or CBF-adj) to the second AP. The Msg4 can be in the TB-PPDU format (e.g., if second AP needs to individually identify each transmitting device), or in non-HT DUP format. If any second STAs are addressed by Msg3, the second STAs can respond with Msg4 using the ICR, indicating availability or duration of availability (e.g., for IDC) for the CBF TXOP. Transmission of the response by first AP could depend on whether first AP supports such a capability (as negotiated beforehand between the APs), or whether second AP solicits such a response from second AP (e.g., in Msg3). If the second AP is capable and the response is solicited, the first AP may respond to second AP with ICR (e.g., as acknowledgement for Msg3, or to reserve medium, etc.).

Transmission parameters for first AP's response (e.g., MCS, Nss, RU-allocation, etc.) can be specified beforehand (e.g., as part of Msg3, or via prior negotiation between first AP and second AP). Padding may be included, which can provide the second AP additional time to process the received frame (e.g., second AP could specify a longer duration or length for Msg4 in Msg3).

The second AP can transmit Msg3 addressed to any candidate second STA in the set of candidate STAs the second AP identifies to participate in this TXOP (e.g., based on the presence of traffic, availability of downlink CSI, suitability for CBF, etc.), and to first AP. If second STAs are addressed by the second AP, Msg3 performs the function of ICF for those STAs.

The Msg3 can embed or include the CBF response (e.g., CBF-resp) for first AP which can signal information on participating second AP STAs. In some instances, the CBF response can signal the second AP's non-participation in CBF (e.g., if no participating second STAs are identified). Padding may be included (e.g., as pre-negotiated by second STAs and/or first AP with second AP) to provide any addressed second STAs and first AP additional time to process the received frame and prepare for any response.

The first AP can transmit Msg4 (e.g., CBF adjust) to the second AP. The Msg4 can be in the TB-PPDU format (e.g., if second AP needs to individually identify each transmitting STAs), or in non-HT DUP format. If any second STAs are addressed by Msg3, the second STAs can respond with Msg4 using the ICR, indicating availability or duration of availability (e.g., for IDC) for the CBF TXOP. Transmission of the response by first AP could depend on whether first AP supports such a capability (as negotiated beforehand between the APs), or whether second AP solicits such a response from second AP (e.g., in Msg3). If the second AP is capable and the response is solicited, the first AP may respond to second AP with ICR (e.g., as acknowledgement for Msg3, or to reserve medium, etc.).

Transmission parameters for first AP's response in Msg4 (e.g., MCS, Nss, RU-allocation) can be specified beforehand (e.g., as part of Msg3, or via prior negotiation between first AP and second AP). Padding may be included, which can provide the second AP additional time to process the received frame (e.g., second AP could specify a longer duration or length for Msg4 in Msg3).

. The second STAs and the first AP can transmit the Msg4. Msg4 can be transmitted in TB-PPDU format, if transmissions from different STAs or APs can include different information (such as when first AP transmits Msg4 having a CBF-adj), or when second AP needs to identify each transmitting STA. However, the Msg4 can be transmitted in a non-HT DUP format. The format for Msg4 can be specified in Msg3.

If the second STAs are addressed by Msg3 (e.g., ICF for AP2 STAs or CBF response), the second STAs can respond with Msg4 including ICR, indicating availability or duration of availability (e.g., for IDC) for the CBF TXOP. The decision of whether first AP transmits Msg4 can be conveyed either dynamically via previous signaling within the TXOP (e.g., in Msg1), or by prior negotiation between first AP and second AP. The contents of Msg4 transmitted by first AP to second AP can include a CBF-adj to signal any adjustment to information contained in CBF-req, based on ICRs received from first STAs or CBF-resp from second AP in Msg2. The types of adjustments can include at least one of: no changes to what was signaled in CBF-req, aborting/terminating CBF for this TXOP, a reduction in max payload duration or max duration of the CBF TXOP (e.g., due to IDC for first STAs or CBF-resp of second AP), or certain first STAs dropped from what was signaled in CBF-req (e.g., due to indicated non-availability from IDC requirements, missing ICR in Msg2, etc.).

The type(s) of adjustment allowed in CBF-adj in Msg4 can be pre-negotiated between first AP and second AP. For example, CBF-adj in Msg4 may be restricted to signaling only "No changes to what was signaled in CBF-req" or "Aborting/terminating CBF for this TXOP". Msg4 can further indicate whether Msg5 is solicited from second AP. Padding may be included (e.g., second AP could request a longer duration or length for Msg4 in Msg3) which can provide second AP additional time to process the received frame.

At step 720, the method can include receiving, from the second AP responsive to the first AP not terminating the TXOP via the adjusted first message, a second message (e.g., Msg5) comprising an adjusted CBF response (e.g., CBF-adjust or CBF-adj) to the adjusted first message, the second message comprising information on a second candidate set of stations of the second AP. If first AP does not indicate that the CBF TXOP is aborted or terminated in Msg4, the second AP can transmit Msg5 to first AP based on, for example, prior request from first AP (e.g., in Msg4 or Msg1), the presence of Msg4 from first AP, or prior negotiation between first AP and second AP. The Msg5 can include CBF-adj to signal any adjustment to information in CBF-resp contained in Msg3 on participating second STAs, based on ICRs received from second STAs in Msg4. Possible adjustments can include at least one of: no changes to what was signaled in CBF-resp, Aborting/terminating CBF for this TXOP, Reduction in max payload duration or max CBF-TXOP duration (e.g., due to IDC for second STAs), or certain second STAs dropped from what was signaled in CBF-resp (e.g., due to indicated non-availability from IDC requirements, missing ICR in Msg4, etc.).

The type(s) of adjustment allowed in CBF-adj in Msg5 can be pre-negotiated between first AP and second AP. For example, CBF-adj in Msg5 may be restricted to signaling only "No changes to what was signaled in CBF-resp" or "Aborting/terminating CBF for this TXOP." Padding may be included (e.g., as pre-negotiated between first AP and second AP) to provide first AP additional time to process the received frame and prepare for Msg6.

At step 725, the method can include transmitting by the first AP, responsive to the second AP indicating participation in the TXOP, a third message (e.g., Msg6) to the second AP having a CBF trigger comprising information to synchronize a CBF transmission to be communicated during the TXOP. If the CBF TXOP is not aborted/terminated by either first AP or second AP in preceding messages (e.g., in Msg3, Msg4 or Msg5), the first AP can transmit Msg6 containing CBF-trigger to the second AP. The Msg6 can signal preamble contents for CBF transmission and enable second AP to synchronize with the first AP (e.g., align start-time of CBF PPDU, estimate and compensate for frequency-offset of second AP relative to first AP, etc.). Padding may be included (e.g., as pre-negotiated between first AP and second AP) to provide second AP additional time to process the received frame and prepare for upcoming transmission. The first AP and the second AP can initiate CBF PPDU transmission after Msg6, with an identical preamble content to ensure correct decoding at the participants to the CBF TXOP (e.g., APs and STAs). Successive transmissions in method 700 may be separated by a duration of short-inter-frame-spacing (i.e., SIFS).

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A,' only `B,' as well as both 'A' and 'B.' Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed, and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system comprising:
a first access point, AP, (205) configured to:
transmit, to a second AP (205) that is capable of participating in coordinated beamforming, CBF, and a first candidate set of stations (240) of the first AP (205), a first message to initiate transmission opportunity, TXOP, with an embedded CBF request (525);
wherein the second AP (205) is configured to:
transmit a second message to the first AP (205) and a second candidate set of stations (240) of the second AP (205) identified to participate in the TXOP with an embedded CBF response (530) responsive to the CBF request (525);
wherein the first AP (205), responsive to receiving the CBF response (530) that second AP (205) is to participate in CBF, transmits to the second AP (205) a third message having a CBF trigger (545) comprising information to synchronize a CBF transmission to be communicated during the TXOP.

2. The system of claim 1, wherein the first AP (205) is configured to include in the CBF request (525) a list of identifiers for the first candidate set of stations (240) to participate in CBF and information on a proposed number of spatial streams in the CBF transmission for each station (240) in the first candidate set of stations (240).

3. The system of claim 2, wherein the CBF response (530) of the second AP (205) includes of a list of identifiers for the second candidate set of stations (240) to participate in CBF and a proposed number of spatial streams in the CBF transmission for each station (240) in the second candidate set of stations (240) for the first AP (205) to determine a schedule for the CBF transmission.

4. The system of any of claims 1 to 3, wherein the first AP (205) is configured to receive from one or more stations (240) of the first candidate set of stations (240), responsive to the first message, information on availability to participate in the TXOP and information on durations of availability in the TXOP of the one or more stations (240) of the first candidate set of stations (240), and wherein the first AP (205) is configured to determine, based on the information on availability and the information on durations, at least one of: an ability of the first AP (205) to participate in CBF during the TXOP, or a first set of stations (240) from the first candidate set of stations (240) of the first AP (205) to participate in CBF during the TXOP, or a maximum duration of participation in CBF of the first AP (205) during the TXOP .

5. The system of claim 4, wherein the first AP (205) is configured to include in the third message an indication of at least one of: the ability of the first AP (205) to participate in CBF during the TXOP, the first set of stations (240) of the first AP (205) to participate in CBF during the TXOP, or a maximum duration of participation in CBF of the first AP (205) during the TXOP.

6. The system of any of claims 1 to 5, comprising at least one of the following features:
wherein the first AP (205) is configured to include in the CBF trigger information to synchronize one or more of a timing of transmission of a preamble or a content of a preamble for a physical protocol data unit, PPDU, of the CBF transmission to be communicated during the during the TXOP;
wherein the first AP (205) is configured to include padding in the first message to provide at least one of the second AP (205) or at least one station (240) of the first candidate set of stations (240) a time interval to process information included in the first message prior to generating one or more responses on availability of the second AP (205) or the at least one station (240) to participate in CBF;
wherein the second AP (205) is configured to transmit, a preliminary CBF response (530) to the first access point (205), indicative of participation of the second AP (205) prior to receipt of information on availability of the second candidate set of stations (240).

7. The system of any of claims 1 to 6, wherein the first AP (205) determines a schedule for transmitting data of one or more stations (240) of the first candidate set of stations (240) during the TXOP prior to receiving information on availability of the second candidate set of stations (240);
in particular wherein the first AP (205) adjusts the schedule responsive to a message transmitted by the second AP (205), the message including the information on the second candidate set of stations (240) following receipt of the CBF response (530) from the second AP (205).

8. A system comprising:
a first access point, AP, (205) configured to:
transmit, to a second AP (205) that is capable of participating in coordinated beamforming, CBF, and a first candidate set of stations (240) of the first AP (205), a first message to initiate transmission opportunity, TXOP, with an embedded CBF request (525);
receive, from the first candidate set of stations (240) responsive to the first message, one or more indications corresponding to availability of one or more first stations (240) of the first candidate set of stations (240) for participation in the TXOP;
transmit, to the second AP (205) in response to the one or more indications, an adjusted first message to initiate the TXOP according to an embedded adjusted CBF request (525);
receive, from the second AP (205) responsive to the first AP (205) not terminating the TXOP via the adjusted first message, a second message comprising an adjusted CBF response (530) to the adjusted first message, the second message comprising information on a second candidate set of stations (240) of the second AP (205); and
transmit, responsive to the second AP (205) indicating participation in the TXOP via the second message, a third message to the second AP (205) having a CBF trigger (545) comprising information to synchronize a CBF transmission to be communicated during the TXOP.

9. The system of claim 8, wherein the first AP (205) is configured to:
determine, based on the one or more indications, that a first subset of the one or more first stations (240) is unavailable for participation in the TXOP and a second subset of the one or more first stations (240) is available for participation in the TXOP; and
generate, responsive to the determination, the adjusted CBF request (525) indicating the second subset of the one or more first stations (240) as participating in the TXOP;
in particular wherein the one or more indications are received via at least one of a trigger-based physical protocol data unit, TB-PPDU, format or a non-high-throughput duplicate transmission, non-HT DUP, format.

10. The system of claim 8 or 9, comprising at least one of the following features:
i) wherein the first AP (205) is configured to:
receive the one or more indications corresponding to one or more durations of availability of the one or more first stations (240); and
determine the availability of the one or more first stations (240) based on the one or more durations;
ii) wherein the first AP (205) is configured to include padding in the first message to provide additional time for the first candidate set of stations (240) to generate information on availability to participate in CBF during the TXOP.

11. A method, comprising:
transmitting, by a first access point, AP, (205) to a second AP (205) that is capable of participating in coordinated beamforming, CBF, and a first candidate set of stations (240) of the first AP (205), a first message to initiate transmission opportunity, TXOP, with an embedded CBF request (525);
transmitting, by the second AP (205), a second message to the first AP (205) and a second candidate set of stations (240) of the second AP (205) identified to participate in the TXOP with an embedded CBF response (530) responsive to the CBF request (525);
transmitting, by the first AP (205), responsive to receiving the CBF response (530) that second AP (205) is to participate in CBF, to the second AP (205) a third message having a CBF trigger (545) comprising information to synchronize a CBF transmission to be communicated during the TXOP.

12. The method of claim 11, comprising:
including, by the first AP (205), in the CBF request (525), a list of identifiers for the first candidate set of station (240)s to participate in the CBF and information on a proposed number of spatial streams in the CBF transmission for each station (240) in the first candidate set of stations (240).

13. The method of claim 12, comprising:
including, by the second AP (205), within the CBF response (530) from the second AP (205), a list of identifiers for the second candidate set of stations (240) to participate in the CBF and a proposed number of spatial streams in the CBF transmission for each station (240) in the second candidate set of stations (240); and
determining, by the first AP (205), a schedule for the CBF transmission.

14. The method of any of claims 11 to 13, comprising:
receiving, by the first AP (205), from one or more stations (240) of the first candidate set of stations (240), responsive to the first message, information on availability to participate in the TXOP or information on durations of availability in the TXOP of the one or more stations (240) of the first candidate set of stations (240); and
determining, by the first AP (205), based on the information on availability or the information on durations, at least one of: an ability of the first AP (205) to participate in CBF during the TXOP, or a first set of stations (240) from the first candidate set of stations (240) of the first AP (205) to participate in CBF during the TXOP, or a maximum duration of participation in CBF of the first AP (205) during the TXOP.

15. The method of claim 14, comprising:
including, by the first AP (205), in the third message, an indication of at least one of: the ability of the first AP (205) to participate in CBF during the TXOP, the first set of stations (240) of the first AP (205) to participate in CBF during the TXOP, or a maximum duration of participation in CBF of the first AP (205) during the TXOP.
